(19) Europäisches Patentamt / European Patent Office / Office européen des brevets

(11) **EP 4 319 388 A1**

(12) **EUROPEAN PATENT APPLICATION**
published in accordance with Art. 153(4) EPC

(43) Date of publication:
**07.02.2024 Bulletin 2024/06**

(21) Application number: **22774309.3**

(22) Date of filing: **24.03.2022**

(51) International Patent Classification (IPC):
**H04W 72/04** (2023.01)    **H04W 72/12** (2023.01)

(52) Cooperative Patent Classification (CPC):
**H04W 72/04; H04W 72/12**

(86) International application number:
**PCT/CN2022/082728**

(87) International publication number:
**WO 2022/199655 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 CN 202110321320**

(71) Applicant: **Vivo Mobile Communication Co., Ltd.
Dongguan, Guangdong 523863 (CN)**

(72) Inventors:
• LIU, Siqi
  Dongguan, Guangdong 523863 (CN)
• LI, Gen
  Dongguan, Guangdong 523863 (CN)
• JI, Zichao
  Dongguan, Guangdong 523863 (CN)
• PAN, Xueming
  Dongguan, Guangdong 523863 (CN)

(74) Representative: **Lavoix
Bayerstraße 83
80335 München (DE)**

(54) **CONTROL CHANNEL MONITORING METHOD AND APPARATUS, TERMINAL AND NETWORK SIDE DEVICE**

(57) The application discloses a control channel monitoring method and apparatus, a terminal, and a network-side device, and pertains to the field of communication technologies. The control channel monitoring method in embodiments of the application includes: obtaining, by a terminal, a first channel monitoring budget; where a first cell supports being scheduled by M cells, and M is an integer greater than 1; and performing, by the terminal, a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring.

FIG. 5

501 — A terminal obtains a first channel monitoring budget

502 — The terminal performs a first operation on at least part of control resources in first control resources according to a second channel monitoring budget

**Description**

**CROSS-REFERENCE TO RELATED APPLICATIONS**

This application claims priority to Chinese Patent Application No. 202110321320.7, filed in China on March 25, 2021, which is incorporated herein by reference in its entirety.

**TECHNICAL FIELD**

This application pertains to the field of communication technologies, and specifically, relates to a control channel monitoring method and apparatus, a terminal, and a network-side device.

**BACKGROUND**

A fifth-generation (5th-Generation, 5G) new radio (New Radio, NR) system supports carrier aggregation (Carrier Aggregation, CA) to configure and activate multiple carriers (Component Carrier, CC) or cells for a terminal device (User Equipment, UE), and supports cross-carrier scheduling in a CA scenario. However, in the prior art, one cell can be usually scheduled only by one scheduling cell, that is, can be merely self-scheduled or scheduled by another cell, and a primary cell (Primary Cell, PCell) can be scheduled only by the PCell itself. Due to limited control resources of a scheduling cell, it is easy to cause scheduling congestion in the scheduling cell.

**SUMMARY**

Embodiments of this application provide a control channel monitoring method and apparatus, a terminal, and a network-side device, which can alleviate the problem of scheduling congestion in a scheduling cell.
According to a first aspect, a control channel monitoring method is provided, where the method includes:

obtaining, by a terminal, a first channel monitoring budget; where a first cell supports being scheduled by M cells, and M is an integer greater than 1; the M cells include the first cell and the first channel monitoring budget includes at least one of the following: a channel monitoring budget corresponding to at least one cell in the M cells, and a joint channel monitoring budget corresponding to at least two cells in the M cells; or, the M cells do not include the first cell and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells; and
performing, by the terminal, a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring.

According to a second aspect, a control channel monitoring apparatus is provided, where the apparatus includes:

an obtaining module, configured to obtain a first channel monitoring budget; where a first cell supports being scheduled by M cells, and M is an integer greater than 1; the M cells include the first cell and the first channel monitoring budget includes at least one of the following: a channel monitoring budget corresponding to at least one cell in the M cells, and a joint channel monitoring budget corresponding to at least two cells in the M cells; or, the M cells do not include the first cell and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells; and
an operation module, configured to perform a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring.

According to a third aspect, a control channel monitoring method is provided, where the method includes:

configuring or allocating, by a network-side device, a first control resource according to a second channel monitoring budget; where
the second channel monitoring budget includes at least one channel monitoring budget of a first channel monitoring budget, a first cell supports being scheduled by M cells, and M is an integer greater than 1;
the M cells include the first cell, and the first channel monitoring budget includes at least one of the following: a channel monitoring budget corresponding to at least one cell in the M cells, and a joint channel monitoring budget corresponding to at least two cells in the M cells; or
the M cells do not include the first cell, and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells.

According to a fourth aspect, a control channel monitoring apparatus is provided, where the apparatus includes:

a processing module, configured to configure or allocate a first control resource according to a second channel monitoring budget; where
the second channel monitoring budget includes at least one channel monitoring budget of a first channel monitoring budget, a first cell supports being scheduled by M cells, and M is an integer greater than 1;
the M cells include the first cell, and the first channel monitoring budget includes at least one of the following: a channel monitoring budget corresponding to at least one cell in the M cells, and a joint channel monitoring budget corresponding to at least two cells in the M cells; or
the M cells do not include the first cell, and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells.

According to a fifth aspect, a terminal is provided, where the terminal includes a processor, a memory, and a program or instructions stored in the memory and capable of running on the processor, and when the program or the instructions are executed by the processor, the steps of the method according to the first aspect are implemented.

According to a sixth aspect, a terminal is provided, including a processor and a communication interface, where the processor is configured to obtain a first channel monitoring budget; where a first cell supports being scheduled by M cells, and M is an integer greater than 1; the M cells include the first cell and the first channel monitoring budget includes at least one of the following: a channel monitoring budget corresponding to at least one cell in the M cells, and a joint channel monitoring budget corresponding to at least two cells in the M cells; or, the M cells do not include the first cell and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells; and
the communication interface is configured to perform a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring.

According to a seventh aspect, a network-side device is provided, where the network-side device includes a processor, a memory, and a program or instructions stored in the memory and capable of running on the processor, and when the program or the instructions are executed by the processor, the steps of the method according to the third aspect are implemented.

According to an eighth aspect, a network-side device is provided, including a processor and a communication interface, where the communication interface is configured to configure or allocate a first control resource according to a second channel monitoring budget; where

the second channel monitoring budget includes at least one channel monitoring budget of a first channel monitoring budget, a first cell supports being scheduled by M cells, and M is an integer greater than 1;
the M cells include the first cell, and the first channel monitoring budget includes at least one of the following: a channel monitoring budget corresponding to at least one cell in the M cells, and a joint channel monitoring budget corresponding to at least two cells in the M cells; or
the M cells do not include the first cell, and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells.

According to a ninth aspect, a readable storage medium is provided, where a program or instructions are stored in the readable storage medium, and when the program or the instructions are executed by a processor, the steps of the method according to the first aspect are implemented or the steps of the method according to the third aspect are implemented.

According to a tenth aspect, a chip is provided, where the chip includes a processor and a communication interface, the communication interface is coupled to the processor, and the processor is configured to run a program or instructions to implement the steps of the method according to the first aspect or implement the steps of the method according to the third aspect.

According to an eleventh aspect, a computer program product or program product is provided, where the computer program product or program product is stored in a non-volatile storage medium, and the program or program product is executed by at least one processor to implement the steps of the method according to the first aspect or the steps of the method according to the third aspect.

In the embodiments of this application, in a case that the first cell supports being scheduled by multiple cells, the terminal allocates and monitors at least part of control resources in the first control resources according to at least one channel monitoring budget in the first channel monitoring budget. This can not only alleviate the problem of scheduling congestion in the scheduling cell of the first cell, but also reduce demodulation complexity for the terminal during scheduling of the first cell by multiple cells.

**BRIEF DESCRIPTION OF DRAWINGS**

FIG. 1 is a block diagram of a wireless communication system to which the embodiments of this application are applicable;

FIG. 2 is a schematic diagram of frequency bands of difference cells according to an embodiment of this application;

FIG. 3 is a schematic diagram of scheduling a PCell by an SCell according to an embodiment of this application;

FIG. 4 is a first schematic diagram of a control resource configuration according to an embodiment of this application;

FIG. 5 is a flowchart of a control channel monitoring method according to an embodiment of this application;

FIG. 6 is a flowchart of another control channel monitoring method according to an embodiment of this application;

FIG. 7a is a second schematic diagram of a control resource configuration according to an embodiment of this application;

FIG. 7b is a third schematic diagram of a control resource configuration according to an embodiment of this application;

FIG. 7c is a fourth schematic diagram of a control resource configuration according to an embodiment of this application;

FIG. 7d is a fifth schematic diagram of a control resource configuration according to an embodiment of this application;

FIG. 7e is a sixth schematic diagram of a control resource configuration according to an embodiment of this application;

FIG. 8 is a structural diagram of a control channel monitoring apparatus according to an embodiment of this application;

FIG. 9 is a structural diagram of another control channel monitoring apparatus according to an embodiment of this application;

FIG. 10 is a structural diagram of a communication device according to an embodiment of this application;

FIG. 11 is a structural diagram of a terminal according to an embodiment of this application; and

FIG. 12 is a structural diagram of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

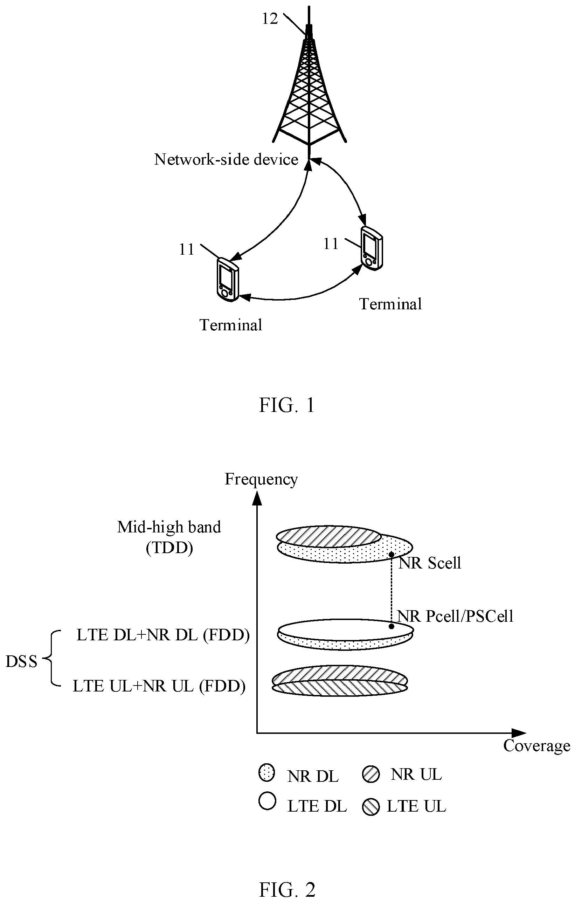

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For ease of understanding, the following describes related content included in the embodiments of this application.

Cell scheduling:

The fifth-generation (5th-Generation, 5G) new radio (New Radio, NR) system supports configuring one or more component carriers (component carrier, CC) or cells for user equipment (User Equipment, UE). In a case that a self-scheduling mode under single-carrier mode or carrier aggregation (carrier aggregation, CA) is configured for the UE, multiple control resource sets (Control Resource Set, CORESET) and multiple search spaces (Search Space, SS) may be configured for each CC or cell, including common search space (Common Search Space, CSS) and UE-specific search space (UE-specific Search Space, USS). A network may flexibly configure a quantity of blind detections for each search space set, and a CORESET may be flexibly associated with a search space set. According to the configured CORESET and SS, the UE performs blind detection on physical downlink control channel (Physical Downlink Control Channel, PDCCH) by using various radio network temporary identifiers (Radio Network Temporary Identity, RNTI) and demodulates downlink control information (Downlink control information, DCI), to obtain scheduling information of each cell. Each piece of DCI schedules data of one cell.

If channel quality of some cells is not good enough or a channel congestion probability is relatively high, the network can configure cross-carrier scheduling for the LTE, that is, configure a control channel in other cells with better channel quality, for example, in a primary cell (Primary Cell, PCell), so as to perform cross-carrier scheduling for other cells, for example, data of a secondary cell (Secondary Cell, SCell). Subcarrier spacings (Subcarrier Spacing, SCS) of the scheduling cell (Scheduling Cell) and the scheduled cell (Scheduled Cell) may be the same or different. The scheduling cell may be in a self-scheduling mode, and in this case, the cell schedules itself only. If cross-carrier scheduling is configured for the scheduling cell, the scheduling cell may also schedule one or more scheduled cells other than the scheduling cell itself. The scheduled cell does not possess its own PDCCH and can be scheduled only by the scheduling cell. In the fifteenth release (Release 15) NR system, one cell can be scheduled only by one scheduling cell, that is, can be only self-scheduled or scheduled by another cell, and a PCell can only be scheduled by the PCell itself.

To reduce implementation complexity for the UE, the NR system specifies a maximum processing capability of the UE for blindly detecting PDCCH of one CC or cell. This capability includes two parts: a maximum number of PDCCH candidates (candidate) for blind detection in one slot (slot), and a maximum number of channel estimates required for blind detection by the UE, that is, the number of non-overlapping control channel elements (Control Channel Element, CCE). The maximum processing capability of the UE is related to an SCS of a CC or cell for blind detection, that is, the processing capability is different for different SCSs in one slot, as shown in Table 1 to Table 3. In addition, the LTE can also report the maximum blind detection capability supported by the UE during CA.

In addition, to reduce implementation complexity for the UE, the NR system stipulates a DCI size budget (DCI size budget) for the UE, that is, it is stipulated that for each scheduled cell, the maximum number of DCI formats of different sizes that the UE monitors is 4, and the maximum number of DCI formats of different sizes in the USS is 3.

**Table 1 SCS configuration supported by UE**

| $\mu$ | $\Delta f = 2^{\mu} \cdot 15[kHz]$ |
|---|---|
| 0 | 15 |
| 1 | 30 |
| 2 | 60 |
| 3 | 120 |
|  |  |

**Table 2 Maximum number of PDCCH candidates per slot under different SCS configurations in a single cell**

| $\mu$ | $M_{PDCCH}^{max,slot,\mu}$ Maximum number of PDCCH candidates per slot in each cell |
|---|---|
| 0 | 44 |
| 1 | 36 |
| 2 | 22 |
| 3 | 20 |

**Table 3 Maximum number of non-overlapping CCEs per slot under different SCS configurations in a single cell**

| $\mu$ | $C_{PDCCH}^{max,slot,\mu}$ Maximum number of non-overlapping CCEs per slot in each cell |
|---|---|
| 0 | 56 |
| 1 | 56 |
| 2 | 48 |
| 3 | 32 |

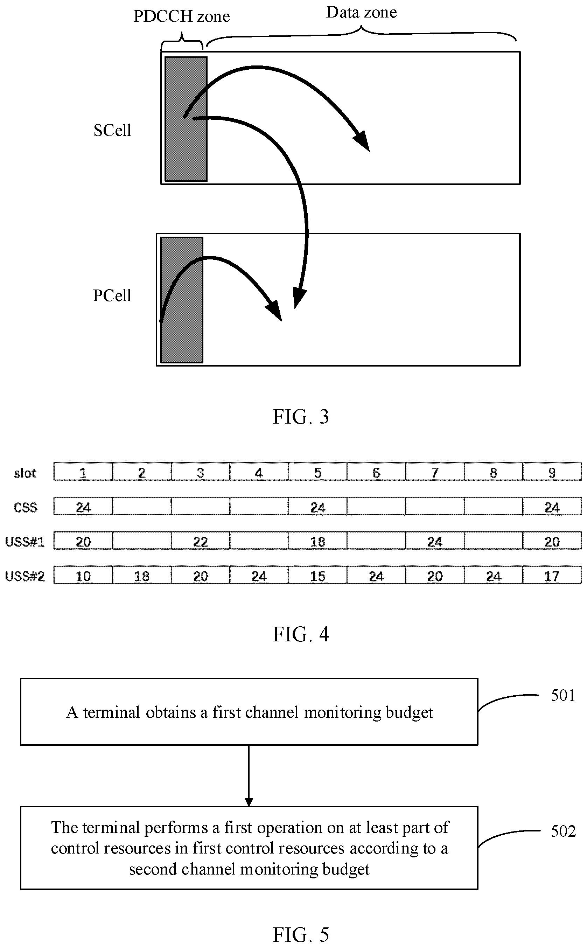

It should be noted that in consideration of enhancing control channel coverage, a PCell is generally deployed on a low-band carrier, as shown in FIG. 2. However, low-band carriers have insufficient bandwidths and have been deployed in large numbers for other series, such as long term evolution (Long Term Evolution, LTE). In this case, it is necessary to schedule the PCell by using an SCell to resolve the problem of limited control channel capacity of the PCell and reduce overheads of the control channel PDCCH, as shown in FIG. 3. However, the Release 15 NR system does not support scheduling of the PCell by using the SCell, and monitoring PDCCHs in two scheduling cells may greatly increase complexity and power consumption of demodulation and implementation for the UE and increase hardware costs of the UE, which is not conducive to implementation of the UE.

Overbooking (Overbooking):

In a case that multiple search space sets (Search Space Set, SS set) are configured, because monitoring spaces of different SS sets are configured independently, the number of PDCCH candidates/CCEs may change at different times. Therefore, a base station (Base Station, BS) is allowed to configure, in each slot, the total number of PDCCH candidates/CCEs exceeding user capabilities, which is referred to as overbooking (Overbooking).
According to the configuration, in each slot, mapping of SS sets is made according to the following rules:

(1) Preferentially perform mapping of CSS sets, that is, preferentially allocate blind detection resources.
(2) Perform mapping of USSs, that is, allocate blind detection resources for USSs, and perform mapping or allocation in an ascending order of SS set IDs. If the number of PDCCH candidates/CCEs exceeds the limit of user processing capability, mapping or allocation of SS sets is no longer performed.

In the case of no overbooking function, configuration of SS sets will be limited by the worst case (worst case), that is, it is necessary to ensure that the total number of PDCCH candidates/CCEs after mapping of the SS sets in each slot does not exceed the user capability. As a result, the BS cannot maximize utilization of the blind detection capability of the user, leading to multi-user congestion.

For example, as shown in FIG. 4, using mapping of CCEs of CSS, USS#1, and USS#2 as an example, monitoring time configurations of CSS, USS#1, and USS#2 are shown in FIG. 4. For slot1, slot5, and slot9, mapping of USS#2 cannot be further performed after mapping of CSS and USS#1, that is, the user capability has been exceeded.

The following describes in detail a control channel monitoring method according to the embodiments of this application by using some embodiments and application scenarios thereof with reference to the accompanying drawings.

Referring to FIG. 5, FIG. 5 is a flowchart of a control channel monitoring method according to an embodiment of this application. The method is executed by a terminal, and as shown in FIG. 5, includes the following steps.

Step 501: The terminal obtains a first channel monitoring budget; where a first cell supports being scheduled by M cells, and M is an integer greater than 1; the M cells include the first cell and the first channel monitoring budget includes at least one of the following: a channel monitoring budget corresponding to at least one cell in the M cells, and a joint channel monitoring budget corresponding to at least two cells in the M cells; or, the M cells do not include the first cell and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells.

In this embodiment, the channel monitoring budget can also be referred to as a channel monitoring quantity or channel blind detection budget, which can be understood as an upper limit value (that is, a maximum value) or a lower limit value (minimum value) of the number of blind detection objects. The blind detection objects may include but are not limited to at least one of PDCCH candidate, CCE, DCI format, search space, monitoring occasion, time span (Span), CORESET, and the like.

It should be noted that if the blind detection objects include at least two of PDCCH candidate, CCE, DCI format, search space, monitoring occasion, span, CORESET, and the like. The channel monitoring budget (Budget) may include limit values corresponding to at least two of the above. For example, if the blind detection objects include PDCCH candidate and CCE, the channel monitoring budget may include a limit value for the number of PDCCH candidates and a limit value for the number of CCEs, where the limit value may include an upper limit value or a lower limit value.

In an implementation, the M cells may include the first cell, that is, the first cell may be self-scheduled or may be scheduled by other cells. For example, a primary cell may be self-scheduled or be scheduled by a secondary cell. In this implementation, the first channel monitoring budget may include at least one of the following: a channel monitoring budget corresponding to at least one cell in the M cells, and a joint channel monitoring budget corresponding to at least two cells in the M cells. Optionally, the first channel monitoring budget includes at least a channel monitoring budget corresponding to the first cell. It should be noted that all the M cells may be serving cells of the terminal.

In another implementation, the M cells do not include the first cell, that is, the first cell cannot be self-scheduled and can be scheduled only by other multiple cells. In this implementation, the first channel monitoring budget may include at least one of the following: the channel monitoring budget corresponding to the first cell, a channel monitoring budget corresponding to at least one cell in the M cells, and a joint channel monitoring budget corresponding to at least two cells in the M cells. Optionally, the first channel monitoring budget includes at least the channel monitoring budget corresponding to the first cell. It should be noted that the first cell and the M cells may be all serving cells of the terminal.

The channel monitoring budget $L1$ corresponding to the first cell may include at least one of the following:

a channel monitoring budget corresponding to self-scheduling of the first cell or the first cell being self-scheduled, for example, the first cell is a Pcell and $L1$ is a channel monitoring budget for self-scheduling of the Pcell;
a channel monitoring budget corresponding to the first cell being a scheduled cell; for example, $L1$ is a channel monitoring budget corresponding to the first cell being a scheduled cell of the first cell itself; and
a channel monitoring budget corresponding to a search space of the first cell.

Optionally, the search space of the first cell may include the following: a CSS and/or USS of the first cell; a specific search space of the first cell; a CSS and/or USS for self-scheduling in the first cell.

A channel monitoring budget $L2$ corresponding to a second cell may include at least one of the following, where the second cell may be any one cell in the M cells other than the first cell:

a channel monitoring budget corresponding to the first cell being scheduled by the second cell, for example, the first cell is a Pcell and L2 is a channel monitoring budget corresponding to scheduling of the Pcell by the Scell;

a channel monitoring budget corresponding to the second cell scheduling the first cell;

a channel monitoring budget corresponding to a search space of the second cell; and

a channel monitoring budget corresponding to a search space usable for scheduling the first cell in the second cell, for example, the first cell is a Pcell, and if USS#X and USS#Y of Scell#1 can be used to schedule the Pcell, L2 is a channel monitoring budget corresponding to USS#X and USS#Y

The joint channel monitoring budget may be understood as a total channel monitoring budget. The joint channel monitoring budget corresponding to at least two cells in the M cells may include at least one joint channel monitoring budget. For example, the M cells include Cell#1, Cell#2, and Cell#3, and in the M cells, the joint channel monitoring budget corresponding to at least two cells may include at least one of the following: a joint channel monitoring budget between Cell#1 and Cell#2, a joint channel monitoring budget between Cell#2 and Cell#3, a joint channel monitoring budget between Cell#1 and Cell#3, and a joint channel monitoring budget between Cell#1, Cell#2, and Cell#3.

It should be noted that the joint channel monitoring budget corresponding to at least two cells may also be referred to as a joint channel monitoring budget corresponding to any cell in the at least two cells, for example, the joint channel monitoring budget between Cell#1 and Cell#2 may also be referred to as a joint channel monitoring budget corresponding to Cell#1 or a joint channel monitoring budget corresponding to Cell#2. If the number of joint channel monitoring budgets is 1, the joint channel monitoring budget corresponding to at least two cells may also be directly referred to as joint channel monitoring budget.

Optionally, the joint channel monitoring budget corresponding to the first cell may be the channel monitoring budget corresponding to the first cell; or, the joint channel monitoring budget corresponding to the first cell may be a channel monitoring budget corresponding to the first cell being a scheduled cell. For example, the joint channel monitoring budget corresponding to the first cell may be a channel monitoring budget corresponding to the first cell being a scheduled cell of the first cell and the first cell being a scheduled cell of the second cell.

Step 502: The terminal performs a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring.

In this embodiment, the second channel monitoring budget includes at least one channel monitoring budget of the first channel monitoring budget. For example, the first channel monitoring budget includes a channel monitoring budget L1 corresponding to the first cell, a channel monitoring budget L2 corresponding to the second cell, and a joint channel monitoring budget L3 between the first cell and the second cell, where the second channel monitoring budget includes L1.

The first control resource may include but is not limited to at least one of search space, monitoring occasion, time span (Span), CORESET, CCE, PDCCH candidate, DCI format, and the like. For example, the first control resource includes at least one CSS of the first cell, or includes at least one USS of the first cell, or includes all SSs of the second cell, or includes an SS of the second cell for scheduling the first cell, or the like.

In an implementation, the terminal may allocate at least part of control resources in the first control resources according to the second channel monitoring budget. It should be noted that the allocating at least part of control resources in the first control resources may also be referred to as mapping at least part of control resources in the first control resources.

In another implementation, the terminal may monitor at least part of control resources in the first control resources according to the second channel monitoring budget. It should be noted that the monitoring at least part of control resources in the first control resources may also be referred to as blind detection on at least part of control resources in the first control resources.

In another implementation, the terminal may allocate and monitor at least part of control resources in the first control resources according to the second channel monitoring budget.

In the control channel monitoring method provided in this embodiment of this application, in a case that the first cell supports being scheduled by multiple cells, the terminal allocates and monitors at least part of control resources in the first control resources according to at least one channel monitoring budget in the first channel monitoring budget. This can not only alleviate the problem of scheduling congestion in the scheduling cell of the first cell, but also reduce demodulation complexity for the terminal during scheduling of the first cell by multiple cells.

Optionally, the M cells include the first cell, and the second channel monitoring budget includes a channel monitoring budget corresponding to the first cell.

In this embodiment, the first cell supports self-scheduling, and the terminal may allocate and/or monitor at least part of control resources in the first control resources according to the channel monitoring budget corresponding to the first cell.

Optionally, the first control resource may include one of the following:

a control resource of the first cell;
a control resource usable for self-scheduling of the first cell;
a control resource dedicated to self-scheduling of the first cell; and
a specific control resource of the first cell.

In this embodiment, the control resource of the first cell is, for example, an SS of the first cell.
The control resource usable for self-scheduling of the first cell may include at least one of a control resource usable for self-scheduling of the first cell in the first cell, and a control resource usable for self-scheduling of the first cell in a cell other than the first cell in the M cells, for example, a USS usable for self-scheduling of the first cell in the first cell.
The control resource dedicated to self-scheduling of the first cell may include at least one of a control resource dedicated to self-scheduling of the first cell in the first cell, and a control resource dedicated to self-scheduling of the first cell in a cell other than the first cell in the M cells, for example, an SS dedicated to self-scheduling of the first cell in the first cell, and an SS dedicated to self-scheduling of the first cell in a cell other than the first cell in the M cells.
The specific control resource of the first cell is, for example, a specific SS of the first cell. It should be noted that the specific control resource of the first cell may be predefined by a protocol or may be indicated by the network-side device.
Optionally, the first control resource may include one of the following:

at least one CSS of the first cell;
at least one USS of the first cell;
at least one CSS and at least one USS that are of the first cell; and
a specific SS of the first cell.

Optionally, the number of first blind detection objects is less than or equal to the channel monitoring budget corresponding to the first cell, and the number of first blind detection objects is the number of blind detection objects within the first control resource on which the terminal needs to perform the first operation within N1 time units, where N1 is a positive integer.
In this embodiment, the blind detection object may include but is not limited to at least one of search space, monitoring occasion (Occasion), time span (Span), CORESET, PDCCH candidate, CCE, DCI format, and the like. The value of N1 may be pre-configured, predefined by the protocol, or configured by the network-side device. The time unit may include but is not limited to slot (slot), monitoring occasion (Occasion), time span (Span), or the like. The N1 time units may be any N1 time units, or may be specific N1 time units.
The number of first blind detection objects may be the number of blind detection objects within the first control resource that the terminal needs to allocate within N1 time units; or, the number of first blind detection objects may be the number of blind detection objects within the first control resource that the terminal needs to monitor within N1 time units; or, the number of first blind detection objects may be the number of blind detection objects within the first control resource that the terminal needs to allocate and monitor within N1 time units.
For example, the number of PDCCH candidates or the number of CCEs in the first control resource that the terminal needs to monitor within N1 time units is less than or equal to the channel monitoring budget corresponding to the first cell.
Optionally, the network-side device may make proper configuration to ensure that the number of first blind detection objects is less than or equal to the channel monitoring budget corresponding to the first cell, for example, the network-side device may configure the number of first blind detection objects within the first control resource within N1 time units to be less than or equal to the channel monitoring budget corresponding to the first cell. Correspondingly, the terminal may not expect the number of first blind detection objects to be greater than the channel monitoring budget corresponding to the first cell, that is, the terminal expects the number of first blind detection objects to be less than or equal to the channel monitoring budget corresponding to the first cell.
Optionally, in a case that the number of second blind detection objects is greater than the channel monitoring budget corresponding to the first cell, the terminal may perform at least one of the following:

dropping at least part of blind detection objects within at least part of control resources in the first control resources; and
performing the first operation on at least part of blind detection objects within at least part of control resources in the first control resources; where
the number of second blind detection objects is the number of blind detection objects within the first control resource on which the terminal needs to perform the first operation within N2 time units, where N2 is a positive integer.

In this embodiment, the blind detection object may include but is not limited to at least one of PDCCH candidate, CCE, DCI, and the like. The value of N2 may be pre-configured, predefined by the protocol, or configured by the network-side device. The time unit may include but is not limited to slot (slot), occasion (occasion), time span (span), or the like. The N2 time units may be any N2 time units, or may be specific N2 time units.

The number of first blind detection objects may be the number of blind detection objects within the first control resource that the terminal needs to allocate within N2 time units; or, the number of first blind detection objects may be the number of blind detection objects within the first control resource that the terminal needs to monitor within N2 time units; or, the number of first blind detection objects may be the number of blind detection objects within the first control resource that the terminal needs to allocate and monitor within N2 time units.

The dropping at least part of blind detection objects within at least part of control resources in the first control resources may be, for example, directly dropping part of control resources in the first control resources, with all corresponding blind detection objects on the part of the control resources being also dropped, or may be dropping part of blind detection objects on at least part of control resources in the first control resources.

For example, in a specific time unit, if the number of PDCCH candidates/CCEs that the terminal needs to monitor exceeds L1 after PDCCH candidates/CCEs of SS#X are allocated, the PDCCH candidates/CCEs of SS#X are not allocated, or the part of PDCCH candidates/CCEs that exceeds L1 in SS#X are not allocated. L1 is the channel monitoring budget corresponding to the first cell.

It should be noted that the dropping at least part of blind detection objects within at least part of control resources in the first control resources may also be referred to as not monitoring or mapping at least part of blind detection objects within at least part of control resources in the first control resources.

The performing the first operation on at least part of blind detection objects within at least part of control resources in the first control resources may be, for example, performing the first operation only on blind detection objects in part of control resources in the first control resources.

For example, in a specific time unit, if the number of PDCCH candidates/CCEs that the terminal needs to monitor exceeds the channel monitoring budget L1 corresponding to the first cell after PDCCH candidates/CCEs of SS#X and SS#Y are allocated, but does not exceed L1 if PDCCH candidates/CCEs of only SS#X are allocated, only SS#X is allocated.

Optionally, N1 and N2 may be equal.

Optionally, the dropping at least part of blind detection objects within at least part of control resources in the first control resources includes one of the following:

dropping at least part of blind detection objects in at least one USS of the first control resources;
dropping at least part of blind detection objects in a dedicated control resource in the first control resources; and
after mapping of blind detection objects in a first control sub-resource according to a first preset rule, if the number of blind detection objects to be monitored by the terminal is greater than the channel monitoring budget corresponding to the first cell, dropping at least part of blind detection objects in the first control sub-resource, where the first control sub-resource includes at least part of control resources in the first control resources.

In this embodiment, the specific control resource may be a specific USS.

The first preset rule can be properly set according to actual needs. For example, the first preset rule may be mapping blind detection objects in control resources in ascending order of indexes of the control resources (for example, indexes of search spaces).

If the number of blind detection objects that the terminal needs to monitor is greater than the channel monitoring budget corresponding to the first cell after mapping of blind detection objects in a first control sub-resource is performed according to the first preset rule, at least part of blind detection objects in the first control sub-resource are dropped. For example, all blind detection objects in the first control sub-resource may be dropped, or only those blind detection objects in the first control sub-resource that exceed the channel monitoring budget corresponding to the first cell may be dropped.

Optionally, the performing the first operation on at least part of blind detection objects within at least part of control resources in the first control resources may include one of the following:

performing the first operation on at least part of blind detection objects in at least one CSS of the first control resources; and
after mapping of blind detection objects in a second control sub-resource according to a second preset rule, if the number of blind detection objects to be monitored by the terminal is less than or equal to the channel monitoring budget corresponding to the first cell, performing the first operation on at least part of blind detection objects in the second control sub-resource, where the second control sub-resource includes at least part of control resources in the first control resources.

In this embodiment, the second preset rule can be properly set according to actual needs. For example, the second preset rule may be mapping blind detection objects in control resources in ascending order of indexes of the control resources (for example, indexes of search spaces).

For example, at least part of blind detection objects in at least one CSS of the first control resource may be allocated or monitored, or at least part of blind detection objects in the second control sub-resource may be allocated or monitored.

Optionally, the second channel monitoring budget includes a channel monitoring budget corresponding to the second cell, and the second cell is a cell different from the first cell in the M cells.

In this embodiment, if the M cells include the first cell, that is, the first cell supports self-scheduling, the second cell may be any cell in the M cells that is different from the first cell; if the M cells do not include the first cell, that is, the first cell does not support self-scheduling, and the second cell may be any cell in the M cells. Specifically, the terminal may allocate and/or monitor at least part of control resources in the first control resources according to the channel monitoring budget corresponding to the second cell that schedules the first cell.

Optionally, the second cell is a cell different from the first cell in the M cells, and the first control resource includes any one of the following:

> a control resource of the second cell;
> a control resource usable for scheduling the first cell by the second cell;
> a control resource dedicated to scheduling of the first cell by the second cell; and
> a specific control resource of the second cell.

In this embodiment, the control resource of the second cell may be understood as any control resource of the second cell, for example, part or all SSs of the second cell.

The control resource usable for scheduling the first cell by the second cell may include at least one of a control resource usable for scheduling the first cell by the second cell in the second cell and a control resource usable for scheduling the first cell by the second cell in a cell other than the second cell in the M cells. For example, the control resource usable for scheduling the first cell by the second cell may be an SS of the control resource usable for scheduling the first cell by the second cell.

The control resource dedicated to scheduling of the first cell by the second cell may include at least one of a control resource dedicated to scheduling of the first cell by the second cell in the second cell and a control resource dedicated to scheduling of the first cell by the second cell in a cell other than the second cell in the M cells. For example, the control resource dedicated to scheduling of the first cell by the second cell may be an SS dedicated to scheduling of the first cell by the second cell.

The specific control resource of the second cell is, for example, a specific SS of the second cell. It should be noted that the specific control resource of the second cell may be predefined by the protocol or may be indicated by the network-side device.

Optionally, the number of third blind detection objects is less than or equal to the channel monitoring budget corresponding to the second cell, the number of third blind detection objects is the number of blind detection objects within the first control resource on which the terminal needs to perform the first operation within N3 time units, and the second cell is a cell different from the first cell in the M cells, where N3 is a positive integer.

In this embodiment, the blind detection object may include but is not limited to at least one of PDCCH candidate, CCE, DCI, and the like. The value of N3 may be pre-configured, predefined by the protocol, or configured by the network-side device. The time unit may include but is not limited to slot (slot), occasion (occasion), time span (span), or the like. The N3 time units may be any N3 time units, or may be specific N3 time units.

The number of third blind detection objects may be the number of blind detection objects within the first control resource that the terminal needs to allocate within N3 time units; or, the number of third blind detection objects may be the number of blind detection objects within the first control resource that the terminal needs to monitor within N3 time units; or, the number of third blind detection objects may be the number of blind detection objects within the first control resource that the terminal needs to allocate and monitor within N3 time units.

For example, the number of PDCCH candidates or the number of CCEs in the first control resource that the terminal needs to monitor within N3 time units is less than or equal to the channel monitoring budget corresponding to the second cell.

Optionally, the network-side device may make proper configuration to ensure that the number of third blind detection objects is less than or equal to the channel monitoring budget corresponding to the second cell, for example, the network-side device may configure the number of first blind detection objects within the first control resource within N3 time units to be less than or equal to the channel monitoring budget corresponding to the second cell. Correspondingly, the terminal may not expect the number of third blind detection objects to be greater than the channel monitoring budget corresponding to the second cell, that is, the terminal expects the number of third blind detection objects to be less than or equal to the channel monitoring budget corresponding to the second cell.

For example, N3=1, the first control resource is all SSs of the second cell, and in a specific time unit, the network-side device guarantees that after mapping of the PDCCH candidate/CCEs of all SSs of the second cell, the number of PDCCH candidates/CCEs that the terminal needs to monitor does not exceed the channel monitoring budget corresponding to the second cell.

Optionally, the M cells include the first cell and the second cell, and the channel monitoring budget corresponding to the second cell is the channel monitoring budget corresponding to the first cell.

In this embodiment, the channel monitoring budget corresponding to the second cell may be the channel monitoring budget corresponding to the first cell. For example, the Pcell is self-scheduled and also scheduled by the Scell. When the Pcell and the Scell use a same SCS, a channel monitoring budget corresponding to the Scell is a channel monitoring budget corresponding to the Pcell; or in a case that the channel monitoring budget of the Pcell is also used by the Scell, the channel monitoring budget corresponding to the Scell is the channel monitoring budget corresponding to the Pcell.

Optionally, the M cells include a third cell, and a channel monitoring budget corresponding to the third cell is a third channel monitoring budget determined based on at least one of the following:

a channel monitoring budget supported by the terminal;
a pre-configured channel monitoring budget;
a protocol-predefined channel monitoring budget;
a channel monitoring budget configured by the network-side device;
a fourth channel monitoring budget determined based on a second control resource; and
a seventh channel monitoring budget determined based on at least one of at least one fifth channel monitoring budget and at least one sixth channel monitoring budget, where the fifth channel monitoring budget is a channel monitoring budget corresponding to a fourth cell, the fourth cell is a cell different from the third cell in the M cells, and the sixth channel monitoring budget is a joint channel monitoring budget corresponding to at least two cells in the M cells.

In this embodiment, the third cell may be the first cell, or may be a cell different from the first cell in the M cells.

The channel monitoring budget supported by the terminal may be, for example, a channel monitoring budget supported by the capability of the terminal. Optionally, the terminal may report to the network-side device a channel monitoring budget supported by the terminal, so as to inform the network-side device of the capability of the terminal.

For the pre-configured channel monitoring budget, optionally, the terminal may also report the pre-configured channel monitoring budget to the network-side device. For example, the pre-configured channel monitoring budget is used as the capability of the terminal, and the terminal reports the pre-configured channel monitoring budget to the network-side device to inform the network-side device of the capability of the terminal.

For the channel monitoring budget configured by the network-side device, for example, the network-side device may indicate, to the terminal using signaling such as SIB, DCI, RRC, or MAC CE, the channel monitoring budget corresponding to the third cell.

The second control resource may include a control resource of the third cell, for example, an SS of the third cell.

For the seventh channel monitoring budget determined based on at least one of at least one fifth channel monitoring budget and at least one sixth channel monitoring budget, the following provides description with examples:

For example, the fifth channel monitoring budget is L5, the sixth channel monitoring budget is L6, and the seventh channel monitoring budget is L7; in this case, L7 can be determined according to one of the following calculation formulas:

$$L7=(\gamma_1*L6-\beta_1*L5)/\alpha_1;$$

where $\alpha_1$, $\beta_1$, and $\gamma_1$ are weighting values;

$$L7=\theta_1*L6;$$

where $\theta_1$ is a weighting value;

$$L7=\Delta_1*L5;$$

where $\Delta_1$ is a weighting value;

$$\frac{X_1}{L7} + \frac{Y_1}{L5} = 1;$$

where $X_1$ and $Y_1$ are both positive integers;

$$\frac{L7}{P_1} + \frac{L5}{Q_1} = 1;$$

where $P_1$ and $Q_1$ are both positive integers;

$$\frac{X_2}{L7} + \frac{Y_2}{L6} = 1;$$

where $X_2$ and $Y_2$ are both positive integers; and

$$\frac{L7}{P_2} + \frac{L6}{Q_2} = 1;$$

where $P_2$ and Q2 are both positive integers.

Optionally, the third channel monitoring budget is one of the following:

the channel monitoring budget supported by the terminal;
the pre-configured channel monitoring budget;
the protocol-predefined channel monitoring budget;
the channel monitoring budget configured by the network-side device;
the fourth channel monitoring budget;
the seventh channel monitoring budget; and
a maximum, minimum, average, or weighted value of at least two of the following: the channel monitoring budget supported by the terminal, the pre-configured channel monitoring budget, the protocol-predefined channel monitoring budget, the channel monitoring budget configured by the network-side device, the fourth channel monitoring budget, and the seventh channel monitoring budget.

In this embodiment, the channel monitoring budget corresponding to the third cell, that is, the third channel monitoring budget may be a channel monitoring budget supported by the terminal, or may be a pre-configured channel monitoring budget, or may be a channel predefined by the protocol, or may be a channel monitoring budget configured by the network-side device, or may be the fourth channel monitoring budget, that is, a channel monitoring budget determined based on the second control resource, or may be the seventh channel monitoring budget, that is, a channel monitoring budget determined based on at least one of at least one fifth channel monitoring budget and at least one sixth channel monitoring budget, or a channel monitoring preset obtained through calculation based on at least two of the channel monitoring budgets obtained in the foregoing six manners. For example, the channel monitoring budget supported by the terminal is La, the channel monitoring budget configured by the network-side device is Lb, and a larger or smaller value of La and Lb may be used as the channel monitoring budget corresponding to the third cell.

Optionally, the fourth channel monitoring budget is a maximum, minimum, average, or weighted value of the N4 quantities of the fourth blind detection objects; and
each quantity of the fourth blind detection objects is determined based on blind detection objects in at least one control resource of the second control resources in each time unit of N4 time units.

In this embodiment, the value of N4 may be pre-configured, predefined by the protocol, or configured by the network-side device. The time unit may include but is not limited to slot (slot), occasion (occasion), time span (span), or the like. The N4 time units may be any N4 time units, or may be specific N4 time units.

The N4 quantities of fourth blind detection objects may be respectively determined based on blind detection objects in at least one control resource of the second control resources in the N4 time units. For example, the N4 quantities of fourth blind detection objects may be respectively the number of blind detection objects in one control resource of the second control resources that the terminal needs to monitor in the N4 time units, or the N4 quantities of fourth blind detection objects may be respectively weighted values of the number of blind detection objects in multiple control resources of the second control resources that the terminal needs to monitor in the N4 time units.

Optionally, each quantity of the fourth blind detection objects is the number of blind detection objects in a third control sub-resource on which the terminal needs to perform the first operation in each time unit of N4 time units, and the third control sub-resource includes one control resource of the second control resources;
or

each quantity of the fourth blind detection objects is a weighted value of the number of blind detection objects in a fourth control sub-resource on which the terminal needs to perform the first operation in each time unit of N4 time units, and the fourth control sub-resource includes at least two of the second control resources.

In this embodiment, the third control sub-resource includes one control resource of the second control resources, for example, the third control sub-resource may include any one control resource of the second control resources, or the third control sub-resource may include a specific control resource in the second control resource. Optionally, the third control sub-resource may include one CSS in the second control resource, or include one USS in the second control resource.

The fourth control sub-resource may include at least two control resources in the second control resources, for example, the fourth control sub-resource may include any multiple control resources in the second control resources, or the fourth control sub-resource may include a specific plurality of control resources in the second control resources. Optionally, the fourth control sub-resource may include at least one CSS and at least one USS in the second control resources, or include at least two CSSs in the second control resources.

In an implementation, the N4 quantities of fourth blind detection objects may be the number of blind detection objects in the third control sub-resource on which the terminal needs to perform the first operation in the N4 time units. For example, the N4 time units include time unit #1 and time unit #2, and the N4 quantities of fourth blind detection objects may include the number of blind detection objects in the third control sub-resource that the terminal needs to monitor in time unit #1 and the number of blind detection objects in the third control sub-resource that the terminal needs to monitor in time unit #2.

For the number of blind detection objects in the third control sub-resource that the terminal needs to monitor in each time unit, for example, if the third control sub-resource is search space #X, the number of blind detection objects in the third control sub-resource that the terminal needs to monitor in each time unit is the number of blind detection objects in search space #X that the terminal needs to monitor in each time unit.

In another implementation, the N4 quantities of fourth blind detection objects may be weighted values of the number of blind detection objects in the fourth control sub-resource on which the terminal needs to perform the first operation in the N4 time units respectively. For example, the N4 time units include time unit #1 and time unit #2, and the N4 quantities of fourth blind detection objects may include a weighted value of the number of blind detection objects of the fourth control sub-resource that the terminal needs to monitor in time unit #1 and a weighted value of the number of blind detection objects of the fourth control sub-resource that the terminal needs to monitor in time unit #2. It should be noted that, in this embodiment, a weighting coefficient may be set properly according to actual conditions, for example, the weighting coefficients are all 1.

For example, the fourth control sub-resource includes SS#1 and SS#2, SS#1 has 2 and 4 PDCCH candidates in slot#1 and slot#3 respectively, and SS#2 has 3 PDCCH candidates in slot#1. In this case, there are a total of 5 (that is, 2+3) PDCCH candidates to be monitored in slot#1, that is, a weighted value of the number of blind detection objects in SS#1 and the number of blind detection objects in SS#2 that the terminal needs to monitor in slot#1 is 5, and there are a total of 4 PDCCH candidates to be monitored in slot#3, that is, a weighted value of the number of blind detection objects in SS#1 and the number of blind detection objects in SS#2 that the terminal needs to monitor in slot#3 is 4 (that is, 4+0). Optionally, if the fourth channel monitoring budget is a maximum value of the N4 quantities of the fourth blind detection objects, because 5>4 in this embodiment, the fourth channel monitoring budget is 5.

In this embodiment, the fourth channel monitoring budget may be a maximum, minimum, average, or weighted value of the N4 quantities of the fourth blind detection objects, which will be described below with examples.

Example 1: The third control sub-resource includes SS#1, the number of PDCCH candidates of SS#1 in slot#1 is C1, and the number of PDCCH candidates of SS#1 in slot#2 is D1. In this case, the fourth channel monitoring budget may be a maximum value of C1 and D1, or a minimum value of C1 and D1, or an average value of C1 and D1, or a weighted value of C1 and D1.

Example 2: The fourth control sub-resource includes SS#1 and SS#2, a weighted value of PDCCH candidates in SS#1 and PDCCH candidates in SS#2 in slot#1 is C2, and a weighted value of PDCCH candidates in SS#1 and PDCCH candidates in SS#2 in slot#2 is D2. In this case, the fourth channel monitoring budget may be a maximum value of C2 and D2, or a minimum value of C2 and D2, or an average of C2 and D2 value, or a weighted value of C2 and D2.

Example 3: For the fourth control sub-resources SS#1 and SS#2, SS#1 and SS#2 overlap only in a specific slot, that is, the N time units are one slot, and the number of PDCCH candidates of SS#1 and the number of PDCCH candidates of SS#1 in the overlapping slot are 4 and 2 respectively. In this case, the fourth channel monitoring budget may be 4+2=6. Optionally, the SS#1 and SS#2 may be SSs for scheduling the first cell.

Example 4: A weighting coefficient is 1, the fourth control sub-resource includes SS#1 and SS#2, SS#1 and SS#2 overlap in four consecutive 30kHz slots, and the four slots may correspond to two 15kHz slots. In the first overlapping 30kHz slot, the number of PDCCH candidates of SS#1 is 4 and the number of PDCCH candidates of SS#2 is 4; in the second overlapping 30kHz slot, the number of PDCCH candidates of SS#1 is 2 and the number of PDCCH candidates of SS#2 is 2; in the third overlapping 30kHz slot, the number of PDCCH candidates of SS#1 is 4 and the number of PDCCH candidates of SS#2 is 4; and in the fourth overlapping 30kHz slot, the number of PDCCH candidates of SS#1 is 6 and the number of PDCCH candidates of SS#2 is 6. The N4 time units are two consecutive 30kHz slots within a time range of one 15kHz slot. In this case, the fourth channel monitoring budget may be determined based on a weighted value (that is, 4+4) of the number of PDCCH candidates in the third slot and a weighted value (that is, 6+6) of the number of PDCCH candidates in the fourth slot, that is, the fourth channel monitoring budget may be (4+4)+(6+6)=20. Optionally, the SS#1 and SS#2 may be SSs for scheduling the first cell.

Example 5: A weighting coefficient is 1, the fourth control sub-resource includes SS#1 and SS#2, SS#1 and SS#2 overlap in four 30kHz slots. In the first overlapping slot, the number of PDCCH candidates of SS#1 is 4 and the number of PDCCH candidates of SS#2 is 4; in the second overlapping 30kHz slot, the number of PDCCH candidates of SS#1 is 2 and the number of PDCCH candidates of SS#2 is 2; in the third overlapping 30kHz slot, the number of PDCCH candidates of SS#1 is 3 and the number of PDCCH candidates of SS#2 is 4; and in the fourth overlapping 30kHz slot, the number of PDCCH candidates of SS#1 is 6 and the number of PDCCH candidates of SS#2 is 6. The N4 time units are two 30kHz slots, and the two 30kHz slots may be consecutive or not consecutive. In this case, the fourth channel monitoring budget may be determined based on a weighted value (that is, 4+4) of the number of PDCCH candidates in the first slot and a weighted value (that is, 6+6) of the number of PDCCH candidates in the fourth slot, that is, the fourth channel monitoring budget may be (4+4)+(6+6)=20. Optionally, the SS#1 and SS#2 may be SSs for scheduling the first cell.

Optionally, the N4 time units are N4 time units corresponding to a first reference subcarrier spacing.

For example, the N4 time units are one slot corresponding to 15kHz.

Optionally, the M cells include the first cell, and the first reference subcarrier spacing is one of the following:

a subcarrier spacing of a cell in the M cells;
a maximum subcarrier spacing in subcarrier spacings of the M cells;
a minimum subcarrier spacing in subcarrier spacings of the M cells;
a pre-configured subcarrier spacing;
a protocol-predefined subcarrier spacing; and
a subcarrier spacing configured by the network-side device.

In this embodiment, the M cells include the first cell, that is, the first cell supports self-scheduling.

In an example in which the M cells include the first cell and the second cell, the first cell is Cell#1, and the second cell is Cell#2. The first reference subcarrier spacing may be Cell#1 SCS, or the first reference subcarrier spacing may be Cell#2 SCS, or the first reference subcarrier spacing may be max(Cell#1 SCS, Cell#2 SCS), or the first reference subcarrier spacing may be min(Cell#1 SCS, Cell#2 SCS), or the first reference subcarrier spacing may be a pre-configured SCS, or the first reference subcarrier spacing may be an SCS predefined by the protocol, or the first reference subcarrier spacing may be an SCS configured by the network-side device.

Optionally, the third cell is the first cell, the fourth channel monitoring budget is a maximum value of the N4 quantities of fourth blind detection objects, and the second control resource includes all CSSs of the first cell.

In this embodiment, in a case that the channel monitoring budget of the first cell is a maximum value of N4 fourth blind detection objects, the second control resource may include all CSSs of the first cell.

Optionally, the third cell is the first cell, and the second control resource includes at least one of the following:

at least one control resource usable for self-scheduling in the first cell;
at least one control resource dedicated to self-scheduling in the first cell;
at least one common control resource of the first cell; and
at least one dedicated control resource of the first cell.

For example, the control resource in this embodiment may include an SS, the common control resource in this embodiment may include a CSS, and the dedicated control resource in this embodiment may include a USS.

The at least one control resource usable for self-scheduling in the first cell may be, for example, any SS or a specific SS or all SSs usable for self-scheduling in the first cell.

The at least one control resource dedicated to self-scheduling in the first cell may be, for example, any SS or a specific SS or all SSs dedicated to self-scheduling in the first cell.

The at least one common control resource of the first cell may be, for example, any CSS or a specific CSS or all CSSs of the first cell.

The at least one dedicated control resource of the first cell may be, for example, any USS or a specific USS or all USSs of the first cell.

Optionally, the M cells do not include the first cell, and the first reference subcarrier spacing is one of the following:

a subcarrier spacing of the first cell;
a subcarrier spacing of a cell in the M cells;
the subcarrier spacing of the first cell and a maximum subcarrier spacing of subcarrier spacings of the M cells;
the subcarrier spacing of the first cell and a minimum subcarrier spacing of subcarrier spacings of the M cells;
a pre-configured subcarrier spacing;
a protocol-predefined subcarrier spacing; and
a subcarrier spacing configured by the network-side device.

In this embodiment, the M cells do not include the first cell, that is, the first cell does not support self-scheduling.

In an example in which the first cell is Cell#1, the M cells include Cell#2 and Cell#3, the first reference subcarrier spacing may be Cell#1 SCS, or the first reference subcarrier spacing may be Cell#2 SCS, or the first reference subcarrier spacing may be Cell#3 SCS, or the first reference subcarrier spacing may be max(Cell#1 SCS, Cell#2 SCS, Cell#3 SCS), or the first reference subcarrier spacing may be min(Cell#1 SCS, Cell#2 SCS, Cell#3 SCS), or the first reference subcarrier spacing may be a pre-configured SCS, or the first reference subcarrier spacing may be an SCS predefined by the protocol, or the first reference subcarrier spacing may be an SCS configured by the network-side device.

Optionally, the N4 time units are consecutive N4 time units.

For example, the N4 time units are two consecutive 30kHz slots.

Optionally, the N4 time units are N4 consecutive time units within a preset time range.

For example, the N4 time units are two consecutive 30kHz slots within a time range of one 15 kHz slot.

Optionally, the third cell is different from the first cell, and the second control resource includes at least one of the following:

at least one control resource in control resources usable for scheduling the first cell on the third cell; and
at least one control resource in control resources dedicated to scheduling of the first cell on the third cell.

For example, the control resource in this embodiment may be an SS.

The at least one control resource in the control resources usable for scheduling the first cell in the third cell is, for example, at least one SS in SSs usable for scheduling the first cell in the third cell. Optionally, the SS usable for scheduling the first cell may alternatively be used for self-scheduling of the third cell.

The at least one control resource in the control resources dedicated to scheduling of the first cell in the third cell is, for example, at least one SS in SSs dedicated to scheduling of the first cell on the third cell.

Optionally, the third cell is different from the first cell, and the second control resource includes at least one of the following:

at least one control resource in control resources unusable for scheduling the first cell in the third cell;
at least one control resource in control resources used for self-scheduling in the third cell;
at least one control resource in control resources used for cross-carrier scheduling in the third cell;
at least one control resource or a specific control resource used for scheduling the first cell; and
at least one control resource or a specific control resource in the third cell.

For example, the control resource in this embodiment may be an SS.

The at least one control resource in the control resources not used for scheduling the first cell in the third cell is, for example, at least one SS in SSs not usable for scheduling the first cell in the third cell.

The at least one control resource in the control resources used for self-scheduling in the third cell is, for example, at least one SS in SSs used for self-scheduling in the third cell.

The at least one control resource in the control resources used for cross-carrier scheduling in the third cell is, for example, at least one SS in SSs used for cross-carrier scheduling in the third cell.

The at least one control resource or specific control resource used for scheduling of the first cell is, for example, any SS used for scheduling of the first cell, or all SSs used for scheduling of the first cell, or a specific SS used for scheduling of the first cell.

The at least one control resource or specific control resource in the third cell is, for example, any SS in the third cell, or all SSs in the third cell, or a specific SS in the third cell.

Optionally, the joint channel monitoring budget corresponding to at least two cells in the M cells includes a joint channel monitoring budget between N cells, the N cells are any N cells in the M cells, N is an integer greater than 1 and less than or equal to M, and the joint channel monitoring budget between the N cells is a first joint channel monitoring budget determined based on at least one of the following:

a joint channel monitoring budget supported by the terminal;
a pre-configured joint channel monitoring budget;
a protocol-predefined joint channel monitoring budget;
a joint channel monitoring budget configured by the network-side device;
a second joint channel monitoring budget determined based on a control resource corresponding to at least one cell in the N cells;
a third joint channel monitoring budget determined based on a reference configuration; and
a fourth joint channel monitoring budget determined based on a channel monitoring budget corresponding to at least one cell in the N cells.

In this embodiment, the N cells may be any N cells in the M cells.

The joint channel monitoring budget supported by the terminal may be, for example, a joint channel monitoring budget supported by the capability of the terminal. Optionally, the terminal may report to the network-side device a joint channel monitoring budget supported by the terminal, so as to inform the network-side device of the capability of the terminal.

For the pre-configured joint channel monitoring budget, optionally, the terminal may also report the pre-configured joint channel monitoring budget to the network-side device. For example, the pre-configured joint channel monitoring budget is used as the capability of the terminal, and the terminal reports the pre-configured joint channel monitoring budget to the network-side device to inform the network-side device of the capability of the terminal.

For the joint channel monitoring budget configured by the network-side device, for example, the network-side device may indicate, to the terminal using signaling such as SIB, DCI, RRC, or MAC CE, the joint channel monitoring budget between the N cells.

The control resource corresponding to at least one cell of the N cells is, for example, at least one SS of at least one cell of the N cells.

The reference configuration may include a reference subcarrier spacing.

The fourth joint channel monitoring budget determined based on a channel monitoring budget corresponding to at least one cell in the N cells is described below with examples.

For example, the N cells include the first cell and the second cell, the channel monitoring budget corresponding to the first cell is L1, the channel monitoring budget corresponding to the second cell is L2, and the fourth joint channel monitoring budget is L3. In this case, L3 can be determined according to one of the following calculation formulas:

$$\gamma_2 L3 = \alpha_2 L1 + \beta_2 L2,$$

where $\alpha_2$ $\beta_2$, and $\gamma_2$ are weighting values;

$$L3 = \theta_2 * L1,$$

where $\theta_2$ is a weighting value;

$$L3 = \Delta_2 * L2,$$

where $\Delta_2$ is a weighting value;

$$\frac{X_3}{L1} + \frac{Y_3}{L2} = L3,$$

where $X_3$ and $Y_3$ are both positive integers;

$$\frac{L1}{P_3}+\frac{L2}{Q_3}=L3,$$

where $P_3$ and $Q_3$ are both positive integers;

$$\frac{X_4}{L1}+\frac{Y_4}{L3}=1,$$

where $X_4$ and $Y_4$ are both positive integers;

$$\frac{L1}{P_4}+\frac{L3}{Q_4}=1,$$

where $P_4$ and $Q_4$ are both positive integers;

$$\frac{X_5}{L2}+\frac{Y_5}{L3}=1,$$

where $X_5$ and $Y_5$ are both positive integers; and

$$\frac{L2}{P_5}+\frac{L3}{Q_5}=1,$$

where $P_5$ and $Q_5$ are both positive integers.

Optionally, the first joint channel monitoring budget includes one of the following:

a joint channel monitoring budget supported by the terminal;
a pre-configured joint channel monitoring budget;
a protocol-predefined joint channel monitoring budget;
a joint channel monitoring budget configured by the network-side device;
the second joint channel monitoring budget;
a third joint channel monitoring budget;
a fourth joint channel monitoring budget; and
a maximum, minimum, average, or weighted value of at least two of the joint channel monitoring budget supported by the terminal, the pre-configured joint channel monitoring budget, the protocol-predefined joint channel monitoring budget, the joint channel monitoring budget configured by the network-side device, the second joint channel monitoring budget, the third joint channel monitoring budget, and the fourth joint channel monitoring budget.

In this embodiment, the joint channel monitoring budget between the N cells, that is, the first joint channel monitoring budget, may be a joint channel monitoring budget supported by the terminal, or may be a pre-configured joint channel monitoring budget, or may be a protocol-predefined joint channel monitoring budget, or may be a joint channel monitoring budget configured by the network-side device, or may be a second joint channel monitoring budget that is a joint channel monitoring budget determined based on a control resource corresponding to at least one cell in the N cells, or may be a third joint channel monitoring budget that is a joint channel monitoring budget determined based on a reference configuration, or may be a fourth joint channel monitoring budget that is a joint channel monitoring budget determined based on a channel monitoring budget corresponding to at least one cell in the N cells, or a channel monitoring budget obtained through calculation based on at least two of the joint channel monitoring budgets obtained in the above seven manners. For example, the joint channel monitoring budget supported by the terminal is Lc, the joint channel monitoring budget configured by the network-side device is Ld, and a weighted value of Lc and Ld may be used as the first joint channel monitoring budget.

Optionally, the N cells include the first cell, and the second joint channel monitoring budget includes one of the following: a carrier aggregation-limited monitoring budget corresponding to the first cell and a non-carrier aggregation-limited monitoring budget corresponding to the first cell.

In this embodiment, the carrier aggregation-limited monitoring budget corresponding to the first cell is a CA limited monitoring budget, and the non-CA limited monitoring budget corresponding to the first cell is a non CAlimited monitoring budget.

Specifically, the non-CA-limited monitoring budget, which is also referred to as non-CA-limited monitoring quantity, non-CA-limited blind detection budget, non-CA-limited blind detection quantity, non-CA-limited single-cell budget, or non-CA-limited single-cell quantity, may include a maximum number of PDCCH candidates $M^{\max,\ slot,\ \mu}_{PDCCH}$ and a maximum number of non-overlapping CCEs $C^{\max,\ slot,\ \mu}_{PDCCH}$ in the forgegoing table 2 or table 3. The terminal may support PDCCH blind detection for $N^{cap}_{cells}$ cells simultaneously according to the specified maximum processing capability of PDCCH, that is, the blind detection capability of the UE is $N^{cap}_{cells}$ non-CA-limited blind detection budgets, a maximum number of PDCCHs supported by the terminal for blind detection is non-CA-limited blind detection budget* $N^{cap}_{cells}$ or a sum of corresponding non-CA-limited blind detection budgets of the $N^{cap}_{cells}$ cells.

When the number of cells configured by the network-side device exceeds $N^{cap}_{cells}$, the blind detection budget needs to be adjusted because the number of PDCCH candidates and/or CCEs supported by the terminal for blind detection does not exceed the non-CA-limited blind detection budget * $N^{cap}_{cells}$ or a sum of non-CA-limited blind detection budgets corresponding to the $N^{cap}_{cells}$ cells. For example, grouping is made based on an SCS of the scheduling cell and adjustment is further made based on the number of cells within a group. The adjusted blind detection budget may no longer be values in the foregoing Table 2 and Table 3, and may become larger or smaller. The adjusted blind detection budget is referred to as a CA-limited blind detection budget of the cell, represented by $M^{total,slot,\mu}_{PDCCH}$ and $C^{total,slot,\mu}_{PDCCH}$.

Optionally, the reference configuration includes a second reference subcarrier spacing.

Optionally, the second reference subcarrier spacing may include one of the following:

a subcarrier spacing of a cell of the N cells;
a maximum subcarrier spacing in subcarrier spacings of the N cells; and
a minimum subcarrier spacing in subcarrier spacings of the N cells.

In an example in which the N cells include Cell#1 and Cell#2, the second reference subcarrier spacing may be Cell#1 SCS, or the second reference subcarrier spacing may be Cell#2 SCS, or the second reference subcarrier spacing may be max(Cell#1 SCS, Cell#2 SCS), or the second reference subcarrier spacing may be min(Cell#1 SCS, Cell#2 SCS).

Optionally, the third joint channel monitoring budget includes a maximum channel monitoring budget in at least one channel monitoring budget corresponding to the second reference subcarrier spacing.

For example, the third joint channel monitoring budget may be a maximum channel monitoring budget in channel monitoring budgets corresponding to time units within the second reference subcarrier spacing, where the channel monitoring budgets corresponding to the time units may be a weighted value of the number of blind detection objects in a control resource corresponding to at least one cell in the N cells in the time units.

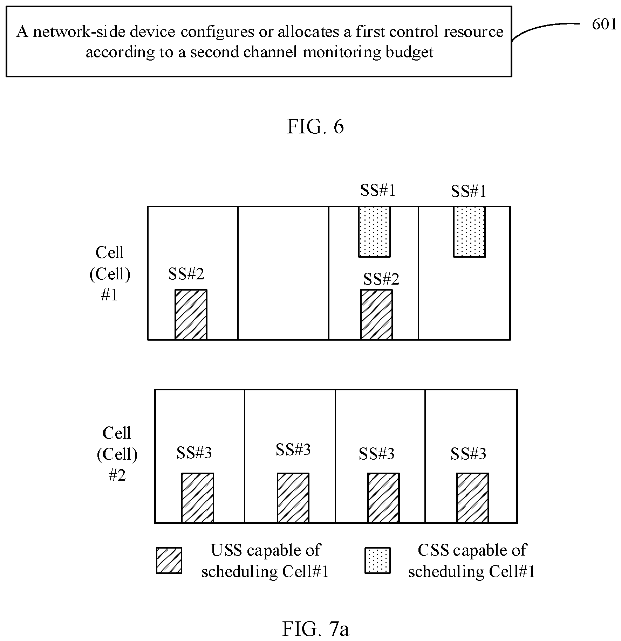

Referring to FIG. 6, FIG. 6 is a flowchart of another control channel monitoring method according to an embodiment of this application. The method is executed by a network-side device, and as shown in FIG. 6, includes the following steps.

Step 601: The network-side device configures or allocates a first control resource according to a second channel monitoring budget.

The second channel monitoring budget includes at least one channel monitoring budget of a first channel monitoring budget, a first cell supports being scheduled by M cells, and M is an integer greater than 1;

the M cells include the first cell, and the first channel monitoring budget includes at least one of the following: a channel monitoring budget corresponding to at least one cell in the M cells, and a joint channel monitoring budget corresponding to at least two cells in the M cells; or

the M cells do not include the first cell, and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells.

In an implementation, the network-side device may configure the first control resource according to the second channel monitoring budget, so that the number of blind detection objects within the first control resource that the terminal needs to allocate within one or more time units does not exceed the second channel monitoring budget, or that the number of blind detection objects within the first control resource that the terminal needs to monitor within one or more time units does not exceed the second channel monitoring budget, or that the number of blind detection objects within the first control resource that the terminal needs to allocate and monitor within one or more time units does not exceed the second channel monitoring budget.

In another implementation, the network-side device may allocate the first control resource according to the second channel monitoring budget, which is referred to as that the network-side device may perform mapping of the first control resource according to the second channel monitoring budget. In this implementation, the number of blind detection objects within the first control resource configured by the network-side device in one or more time units may not exceed the second channel monitoring budget, or the number of blind detection objects of the first control resource configured by the network-side device in one or more time units may exceed the second channel monitoring budget.

Optionally, in a case that the number of blind detection objects of the first control resource configured by the network-side device in one or more time units may exceed the second channel monitoring budget, the network-side device may allocate the first control resource in the same manner as the terminal, so that the terminal can receive scheduling information in a case that the number of blind detection objects within the first control resource that the terminal needs to monitor within one or more time units exceeds the second channel monitoring budget. For example, the blind detection objects within the first control resource are mapped according to a first preset rule until the number of mapped blind detection objects exceeds the second channel monitoring budget.

It should be noted that, for the implementation of this embodiment, reference may be made to related descriptions of the embodiment shown in FIG. 5, and details are not repeated herein.

In the control channel monitoring method provided in this embodiment of this application, in a case that the first cell supports being scheduled by multiple cells, the network-side device configures or allocates the first control resource according to the second channel monitoring budget. This can not only alleviate the problem of scheduling congestion of the scheduling cell of the first cell, but also reduce demodulation complexity for the terminal during scheduling of the first cell by multiple cells.

Optionally, the M cells include the first cell, and the second channel monitoring budget includes a channel monitoring budget corresponding to the first cell.

It should be noted that, for the implementation of this embodiment, reference may be made to related descriptions of the embodiment shown in FIG. 5, and details are not repeated herein.

Optionally, the first control resource includes one of the following:

a control resource of the first cell;
a control resource usable for self-scheduling of the first cell;
a control resource dedicated to self-scheduling of the first cell; and
a specific control resource of the first cell.

It should be noted that, for the implementation of this embodiment, reference may be made to related descriptions of the embodiment shown in FIG. 5, and details are not repeated herein.

Optionally, the first control resource includes one of the following:

at least one common search space CSS of the first cell;
at least one UE-specific search space USS of the first cell;
at least one CSS and at least one USS that are of the first cell; and
a specific search space SS of the first cell.

It should be noted that, for the implementation of this embodiment, reference may be made to related descriptions of the embodiment shown in FIG. 5, and details are not repeated herein.

Optionally, the number of first blind detection objects is less than or equal to the channel monitoring budget corresponding to the first cell; the number of first blind detection objects is the number of blind detection objects within the first control resources on which a terminal needs to perform the first operation within N1 time units, where N1 is a positive integer; and the first operation includes at least one of the following operations: allocation and monitoring.

It should be noted that, for the implementation of this embodiment, reference may be made to related descriptions of the embodiment shown in FIG. 5, and details are not repeated herein.

Optionally, the second channel monitoring budget includes a channel monitoring budget corresponding to the second cell, and the second cell is a cell different from the first cell in the M cells.

It should be noted that, for the implementation of this embodiment, reference may be made to related descriptions of the embodiment shown in FIG. 5, and details are not repeated herein.

Optionally, the second cell is a cell different from the first cell in the M cells, and the first control resource includes any one of the following:

a control resource of the second cell;
a control resource usable for scheduling the first cell by the second cell;
a control resource dedicated to scheduling of the first cell by the second cell; and
a specific control resource of the second cell.

It should be noted that, for the implementation of this embodiment, reference may be made to related descriptions of the embodiment shown in FIG. 5, and details are not repeated herein.

Optionally, the number of third blind detection objects is less than or equal to the channel monitoring budget corresponding to the second cell; the number of third blind detection objects is the number of blind detection objects within the first control resources on which a terminal needs to perform the first operation within N3 time units, where N3 is a positive integer; the second cell is a cell different from the first cell in the M cells; and the first operation includes at least one of the following operations: allocation and monitoring.

It should be noted that, for the implementation of this embodiment, reference may be made to related descriptions of the embodiment shown in FIG. 5, and details are not repeated herein.

Optionally, the M cells include the first cell and the second cell, and the channel monitoring budget corresponding to the second cell is the channel monitoring budget corresponding to the first cell.

It should be noted that, for the implementation of this embodiment, reference may be made to related descriptions of the embodiment shown in FIG. 5, and details are not repeated herein.

Optionally, the M cells include a third cell, and a channel monitoring budget corresponding to the third cell is a third channel monitoring budget determined based on at least one of the following:

a channel monitoring budget supported by a terminal;
a pre-configured channel monitoring budget;
a protocol-predefined channel monitoring budget;
a channel monitoring budget configured by the network-side device;
a fourth channel monitoring budget determined based on a second control resource; and
a seventh channel monitoring budget determined based on at least one of at least one fifth channel monitoring budget and at least one sixth channel monitoring budget, where the fifth channel monitoring budget is a channel monitoring budget corresponding to a fourth cell, the fourth cell is a cell different from the third cell in the M cells, and the sixth channel monitoring budget is a joint channel monitoring budget corresponding to at least two cells in the M cells.

It should be noted that, for the implementation of this embodiment, reference may be made to related descriptions of the embodiment shown in FIG. 5, and details are not repeated herein.

Optionally, the third channel monitoring budget is one of the following:

the channel monitoring budget supported by the terminal;
the pre-configured channel monitoring budget;
the protocol-predefined channel monitoring budget;
the channel monitoring budget configured by the network-side device;
the fourth channel monitoring budget;
the seventh channel monitoring budget; and
a maximum, minimum, average, or weighted value of at least two of the following: the channel monitoring budget supported by the terminal, the pre-configured channel monitoring budget, the protocol-predefined channel monitoring budget, the channel monitoring budget configured by the network-side device, the fourth channel monitoring budget, and the seventh channel monitoring budget.

It should be noted that, for the implementation of this embodiment, reference may be made to related descriptions of the embodiment shown in FIG. 5, and details are not repeated herein.

Optionally, the fourth channel monitoring budget is a maximum, minimum, average, or weighted value of the N4 quantities of the fourth blind detection objects.

Each quantity of the fourth blind detection objects is determined based on blind detection objects in at least one control resource of the second control resources in each time unit of N4 time units.

Optionally, each quantity of the fourth blind detection objects is the number of blind detection objects in a third control sub-resource on which the terminal needs to perform the first operation in each time unit of N4 time units, and the third control sub-resource includes one control resource of the second control resources;

or

each quantity of the fourth blind detection objects is a weighted value of the number of blind detection objects in a fourth control sub-resource on which the terminal needs to perform the first operation in each time unit of N4 time units, and the fourth control sub-resource includes at least two of the second control resources.

It should be noted that, for the implementation of this embodiment, reference may be made to related descriptions of the embodiment shown in FIG. 5, and details are not repeated herein.

Optionally, the N4 time units are N4 time units corresponding to a first reference subcarrier spacing.

It should be noted that, for the implementation of this embodiment, reference may be made to related descriptions of the embodiment shown in FIG. 5, and details are not repeated herein.

Optionally, the M cells include the first cell, and the first reference subcarrier spacing is one of the following:

a subcarrier spacing of a cell in the M cells;
a maximum subcarrier spacing in subcarrier spacings of the M cells;
a minimum subcarrier spacing in subcarrier spacings of the M cells;
a pre-configured subcarrier spacing;
a protocol-predefined subcarrier spacing; and
a subcarrier spacing configured by the network-side device.

It should be noted that, for the implementation of this embodiment, reference may be made to related descriptions of the embodiment shown in FIG. 5, and details are not repeated herein.

Optionally, the third cell is the first cell, the fourth channel monitoring budget is a maximum value of the N4 quantities of fourth blind detection objects, and the second control resource includes all CSSs of the first cell.

It should be noted that, for the implementation of this embodiment, reference may be made to related descriptions of the embodiment shown in FIG. 5, and details are not repeated herein.

Optionally, the third cell is the first cell, and the second control resource includes at least one of the following:

at least one control resource usable for self-scheduling in the first cell;
at least one control resource dedicated to self-scheduling in the first cell;
at least one common control resource of the first cell; and
at least one dedicated control resource of the first cell.

It should be noted that, for the implementation of this embodiment, reference may be made to related descriptions of the embodiment shown in FIG. 5, and details are not repeated herein.

Optionally, the M cells do not include the first cell, and the first reference subcarrier spacing is one of the following:

a subcarrier spacing of the first cell;
a subcarrier spacing of a cell in the M cells;
the subcarrier spacing of the first cell and a maximum subcarrier spacing of subcarrier spacings of the M cells;
the subcarrier spacing of the first cell and a minimum subcarrier spacing of subcarrier spacings of the M cells;
a pre-configured subcarrier spacing;
a protocol-predefined subcarrier spacing; and
a subcarrier spacing configured by the network-side device.

It should be noted that, for the implementation of this embodiment, reference may be made to related descriptions of the embodiment shown in FIG. 5, and details are not repeated herein.

Optionally, the N4 time units are consecutive N4 time units.

It should be noted that, for the implementation of this embodiment, reference may be made to related descriptions of the embodiment shown in FIG. 5, and details are not repeated herein.

Optionally, the N4 time units are N4 consecutive time units within a preset time range.

It should be noted that, for the implementation of this embodiment, reference may be made to related descriptions of the embodiment shown in FIG. 5, and details are not repeated herein.

Optionally, the third cell is different from the first cell, and the second control resource includes at least one of the following:

at least one control resource in control resources usable for scheduling the first cell on the third cell; and
at least one control resource in control resources dedicated to scheduling of the first cell on the third cell.

It should be noted that, for the implementation of this embodiment, reference may be made to related descriptions of the embodiment shown in FIG. 5, and details are not repeated herein.

Optionally, the third cell is different from the first cell, and the second control resource includes at least one of the following:

at least one control resource in control resources unusable for scheduling the first cell in the third cell;
at least one control resource in control resources used for self-scheduling in the third cell;
at least one control resource in control resources used for cross-carrier scheduling in the third cell;
at least one control resource or a specific control resource used for scheduling the first cell; and
at least one control resource or a specific control resource in the third cell.

It should be noted that, for the implementation of this embodiment, reference may be made to related descriptions of the embodiment shown in FIG. 5, and details are not repeated herein.

Optionally, the joint channel monitoring budget corresponding to at least two cells in the M cells includes a joint channel monitoring budget between N cells, the N cells are any N cells in the M cells, N is an integer greater than 1 and less than or equal to M, and the joint channel monitoring budget between the N cells is a first joint channel monitoring budget determined based on at least one of the following:

a joint channel monitoring budget supported by a terminal;
a pre-configured joint channel monitoring budget;
a protocol-predefined joint channel monitoring budget;
a joint channel monitoring budget configured by the network-side device;
a second joint channel monitoring budget determined based on a control resource corresponding to at least one cell in the N cells;
a third joint channel monitoring budget determined based on a reference configuration; and
a fourth joint channel monitoring budget determined based on a channel monitoring budget corresponding to at least one cell in the N cells.

It should be noted that, for the implementation of this embodiment, reference may be made to related descriptions of the embodiment shown in FIG. 5, and details are not repeated herein.

Optionally, the first joint channel monitoring budget includes one of the following:

a joint channel monitoring budget supported by a terminal;
a pre-configured joint channel monitoring budget;
a protocol-predefined joint channel monitoring budget;
a joint channel monitoring budget configured by the network-side device;
the second joint channel monitoring budget;
a third joint channel monitoring budget;
a fourth joint channel monitoring budget; and
a maximum, minimum, average, or weighted value of at least two of the joint channel monitoring budget supported by the terminal, the pre-configured joint channel monitoring budget, the protocol-predefined joint channel monitoring budget, the joint channel monitoring budget configured by the network-side device, the second joint channel monitoring budget, the third joint channel monitoring budget, and the fourth joint channel monitoring budget.

It should be noted that, for the implementation of this embodiment, reference may be made to related descriptions of the embodiment shown in FIG. 5, and details are not repeated herein.

Optionally, the N cells include the first cell, and the second joint channel monitoring budget includes one of the following: a carrier aggregation-limited monitoring budget corresponding to the first cell and a non-carrier aggregation-limited monitoring budget corresponding to the first cell.

It should be noted that, for the implementation of this embodiment, reference may be made to related descriptions of the embodiment shown in FIG. 5, and details are not repeated herein.

Optionally, the reference configuration includes a second reference subcarrier spacing.

It should be noted that, for the implementation of this embodiment, reference may be made to related descriptions of the embodiment shown in FIG. 5, and details are not repeated herein.

Optionally, the third joint channel monitoring budget includes a maximum channel monitoring budget in at least one channel monitoring budget corresponding to the second reference subcarrier spacing.

It should be noted that, for the implementation of this embodiment, reference may be made to related descriptions of the embodiment shown in FIG. 5, and details are not repeated herein.

Optionally, the second reference subcarrier spacing includes one of the following:

a subcarrier spacing of a cell of the N cells;
a maximum subcarrier spacing in subcarrier spacings of the N cells; and
a minimum subcarrier spacing in subcarrier spacings of the N cells.

It should be noted that, for the implementation of this embodiment, reference may be made to related descriptions of the embodiment shown in FIG. 5, and details are not repeated herein.

The following describes the embodiments of this application with examples, where a time unit in each example may be slot (slot), occasion (occasion), time span (span), or the like, and L1 may be a channel monitoring budget corresponding to cell#1 (that is, the first cell), L2 is a channel monitoring budget corresponding to cell#2 (that is, the second cell), and L3 is a joint channel monitoring budget between cell#1 and cell#2.

Example 1:

In an optional embodiment in which the number of PDCCH candidates or CCEs in the first control resource that may or actually needs to be monitored within specific or any N1 time units does not exceed L1, the first control resource is a CSS and USS in cell#1 (that is, the first cell), that is, the number of PDCCH candidates or CCEs in a CSS and USS that may or actually need to be monitored in specific or any N1 time units in cell#1 does not exceed L1. The time unit may be slot (slot), occasion (occasion), time span (span), or the like. Further, in a preferred embodiment, L1 is a maximum number of blind detection objects corresponding to one or more CSSs of the first cell in one time unit, or a maximum value of the sum of blind detection objects corresponding to one or more CSSs of the first cell in one time unit.

In another optional embodiment in which the number of PDCCH candidates or CCEs in the first control resource that may or actually needs to be monitored within specific or any N1 time units does not exceed L1, the first control resource is a USS in cell#1, that is, the number of PDCCH candidates or CCEs in a USS that may or actually need to be monitored in specific or any N1 time units in cell#1 does not exceed L1. Further, in a preferred embodiment, L1 is a maximum number of blind detection objects corresponding to one or more CSSs of the first cell in one time unit, or a maximum value of the sum of blind detection objects corresponding to one or more CSSs of the first cell in one time unit.

In another optional embodiment in which the number of PDCCH candidates or CCEs in the first control resource that may or actually needs to be monitored within specific or any N1 time units does not exceed L1, the first control resource is a CSS in cell#1, that is, the number of PDCCH candidates or CCEs in a CSS that may or actually need to be monitored in specific or any N1 time units in cell#1 does not exceed L1. Further, in a preferred embodiment, L1 is a maximum number of blind detection objects corresponding to one or more CSSs of the first cell in one time unit, or a maximum value of the sum of blind detection objects corresponding to one or more CSSs of the first cell in one time unit.

It should be noted that the time unit may be slot (slot), occasion (occasion), time span (span), or the like. L1 may be a channel monitoring budget corresponding to cell#1 (that is, the first cell), L2 is a channel monitoring budget corresponding to cell#2 (that is, the second cell), and L3 is a joint channel monitoring budget between cell#1 and cell#2.

For example, as shown in FIG. 7a, L3=44, L2=20, and L1=44-20=24. There are SS#1 and SS#2 in cell#1, and SS#3 in cell#2, where SS# 2 may be used by cell#2 to schedule cell#1. Therefore, in an example in which the number of first control resources that may or actually needs to be monitored within specific or any N1 time units does not exceed L1, N1=1, the time unit is slot, and the first control resource is a PDCCH candidate. In this case, the number of PDCCH candidates that need to be monitored in any one slot does not exceed 44.

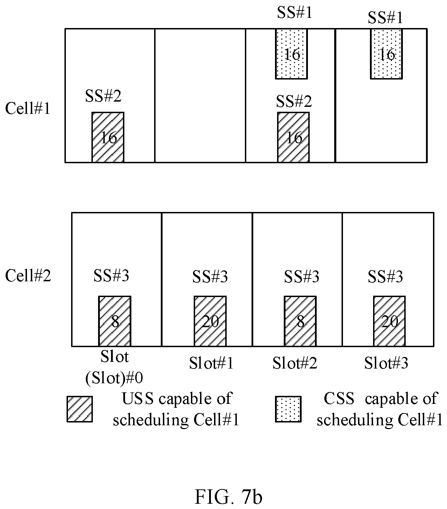

For another example, as shown in FIG. 7b, the number on each SS in FIG. 7b is the number of PDCCH candidates in the SS in the slot. In slot2, for the case of scheduling cell#1, the number of PDCCH candidates for self-scheduling that needs to be monitored in cell#1 is 16+16=32>L1, and therefore the user drops, does not map, or does not monitor SS#2 in slot2.

Example 2: L2 under the same SCS

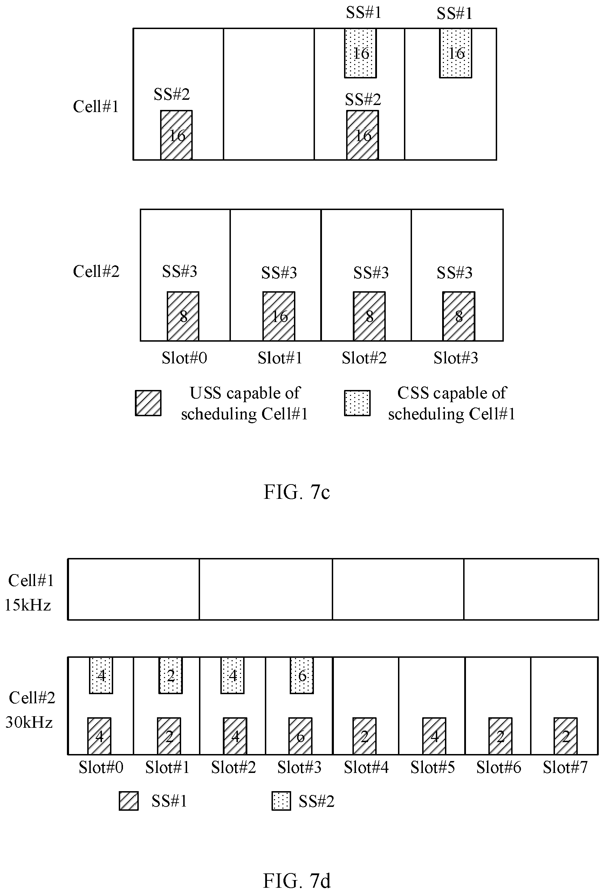

For example, as shown in FIG. 7c, there are SS#1 and SS#2 in cell#1, and SS#3 in cell#2, where SS#2 can be used by cell#2 to schedule cell#1, and cell#1 and cell#2 have a same SCS. The number on each SS in FIG. 7c is the number of PDCCH candidates in the SS in the slot. In slot2, the number of PDCCH candidates that may need to be monitored in SS#2 of cell#2 is 16.

Therefore, in an optional embodiment in which L2 is a maximum number of blind detection objects in the third control sub-resource that the terminal may or actually needs to monitor in specific or any N4 time units, N4=1, the time unit is slot, the third control sub-resource is SS#2, the maximum number of blind detection objects is the maximum number of PDCCH candidates, and L2=16.

Example 3: L2 under difference SCSs

For example, as shown in FIG. 7d, an SS configuration of Cell#1 is not assumed, there are SS#1 and SS#2 in cell#2, cell # 1 SCS=15KHz, and cell #2 SCS=30KHz. The number on each SS in FIG. 7d is the number of PDCCH candidates in the SS in the slot. In an optional embodiment in which L2 is a maximum value of the weighted number of blind detection objects in the third control sub-resource that the terminal may or actually needs to monitor in specific or any N4 time units, a weighting coefficient is 1, SS#1 and SS#2 overlap in specific 4 consecutive 30kHz slots, and the 4 slots may correspond to two 15kHz slots. In the first overlapping slot, the number of PDCCH candidates of SS#1 is 4, and the number of PDCCH candidates of SS#2 is 4. In the second overlapping slot, the number of PDCCH candidates of SS#1 is 2, and the number of PDCCH candidates of SS#2 is 2. In the third overlapping slot, the number of PDCCH candidates of SS#1 is 4, and the number of PDCCH candidates of SS#2 is 4. In the fourth overlapping slot, the number of PDCCH candidates of SS#1 is 6, and the number of PDCCH candidates of SS#2 is 6. The N4 time units are two consecutive 30kHz slots within a time range of one 15kHz slot. In this case, L2 is determined based on slot#2 and slot#3, that is, L2=4+4+6+6=20; further, SS#1 and SS#2 are SSs that can be used for scheduling cell#1.

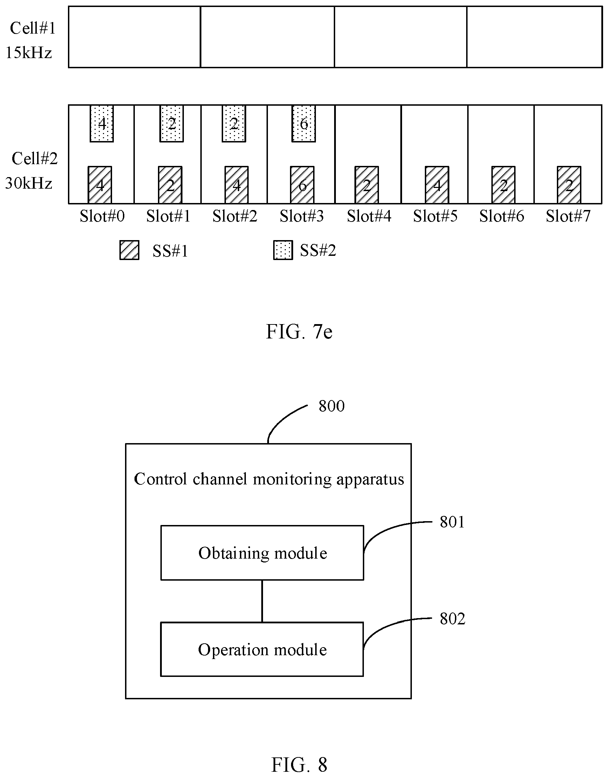

For example, as shown in FIG. 7e, an SS configuration of Cell#1 is not assumed, there are SS#1 and SS#2 in cell#2, cell # 1 SCS=15KHz, and cell #2 SCS=30KHz. In another optional embodiment in which L2 is a maximum value of the weighted number of blind detection objects in the third control sub-resource that the terminal may or actually needs to monitor in specific or any N4 time units, a weighting coefficient is 1, SS#1 and SS#2 overlap in specific 4 consecutive 30kHz slots, and the 4 slots may correspond to two 15kHz slots. In the first overlapping slot, the number of PDCCH candidates of SS#1 is 4, and the number of PDCCH candidates of SS#2 is 4. In the second overlapping slot, the number of PDCCH candidates of SS#1 is 2, and the number of PDCCH candidates of SS#2 is 2. In the third overlapping slot, the number of PDCCH candidates of SS#1 is 2, and the number of PDCCH candidates of SS#2 is 4. In the fourth overlapping slot, the number of PDCCH candidates of SS#1 is 6, and the number of PDCCH candidates of SS#2 is 6. The N4 time units are two consecutive 30kHz slots. In this case, L2 is determined based on slot#0 and slot#3, that is, L2=4+4+6+6=20; further, SS#1 and SS#2 are SSs that can be used for scheduling cell#1.

Example 4: L1 is a maximum number of PDCCH candidates in one slot for cell#1 CSS

For example, there are CSS#1 and CSS#2 in cell#1, and CSS#1 and CSS#2 overlap in slot#1 and slot#2, but do not overlap in other slots. The number of PDCCH candidates of CSS#1 in slot#1 and slot#2 is 2 and 4 respectively; the number of PDCCH candidates of CSS#2 in slot#1 and slot#2 is 2 and 4 respectively; and the number of PDCCH candidates for a non-overlapping part of CSS#1 and CSS#2 does not exceed 8. In this case, L1=4+4=8.

Example 5: L1 is a maximum number of PDCCH candidates required for all SSs in one slot in cell#1

For example, there are CSS#1 and CSS#2 in cell#1, and CSS#1 and USS#2 overlap in slot#1 and slot#2. The number of PDCCH candidates of CSS#1 in slot#1 and slot#2 is 2 and 4 respectively; the number of PDCCH candidates of USS#2 in slot#1 and slot#2 is 2 and 4 respectively; and the number of PDCCH candidates for a non-overlapping part of CSS#1 and USS#2 does not exceed 8. In this case, L1=4+4=8.

In summary, the control channel monitoring method provided in this embodiment of this application can reduce demodulation and implementation complexity for the terminal and power consumption of the terminal.

It should be noted that, for the control channel monitoring method provided in the embodiments of this application, the execution body may be a control channel monitoring apparatus, or a control module for executing the control channel monitoring method in the control channel monitoring apparatus. In the embodiments of this application, the control channel monitoring apparatus provided in the embodiments of this application is described by using the control channel monitoring method being executed by the control channel monitoring apparatus as an example.

Referring to FIG. 8, FIG. 8 is a structural diagram of a control channel monitoring apparatus according to an embodiment of this application. As shown in FIG. 8, the control channel monitoring apparatus 800 includes:

an obtaining module 801, configured to obtain a first channel monitoring budget; where a first cell supports being scheduled by M cells, and M is an integer greater than 1; the M cells include the first cell and the first channel monitoring budget includes at least one of the following: a channel monitoring budget corresponding to at least one cell in the M cells, and a joint channel monitoring budget corresponding to at least two cells in the M cells; or, the M cells do not include the first cell and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells; and an operation module 802, configured to perform a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring.

Optionally, the M cells include the first cell, and the second channel monitoring budget includes a channel monitoring budget corresponding to the first cell.

Optionally, the first control resource includes one of the following:

a control resource of the first cell;
a control resource usable for self-scheduling of the first cell;
a control resource dedicated to self-scheduling of the first cell; and
a specific control resource of the first cell.

Optionally, the first control resource includes one of the following:

at least one common search space CSS of the first cell;
at least one UE-specific search space USS of the first cell;
at least one CSS and at least one USS that are of the first cell; and
a specific search space SS of the first cell.

Optionally, the number of first blind detection objects is less than or equal to the channel monitoring budget corresponding to the first cell, and the number of first blind detection objects is the number of blind detection objects within the first control resource on which the terminal needs to perform the first operation within N1 time units, where N1 is a positive integer.

Optionally, in a case that the number of second blind detection objects is greater than the channel monitoring budget corresponding to the first cell, the terminal performs at least one of the following:

dropping at least part of blind detection objects within at least part of control resources in the first control resources; and
performing the first operation on at least part of blind detection objects within at least part of control resources in the first control resources; where
the number of second blind detection objects is the number of blind detection objects within the first control resource on which the terminal needs to perform the first operation within N2 time units, where N2 is a positive integer.

Optionally, the dropping at least part of blind detection objects within at least part of control resources in the first control resources includes one of the following:

dropping at least part of blind detection objects in at least one USS of the first control resources;
dropping at least part of blind detection objects in a dedicated control resource in the first control resources; and
after mapping of blind detection objects in a first control sub-resource according to a first preset rule, if the number of blind detection objects to be monitored by the terminal is greater than the channel monitoring budget corresponding to the first cell, dropping at least part of blind detection objects in the first control sub-resource, where the first control sub-resource includes at least part of control resources in the first control resources.

Optionally, the performing the first operation on at least part of blind detection objects within at least part of control resources in the first control resources includes one of the following:

performing the first operation on at least part of blind detection objects in at least one CSS of the first control resources; and
after mapping of blind detection objects in a second control sub-resource according to a second preset rule, if the number of blind detection objects to be monitored by the terminal is less than or equal to the channel monitoring budget corresponding to the first cell, performing the first operation on at least part of blind detection objects in the second control sub-resource, where the second control sub-resource includes at least part of control resources in the first control resources.

Optionally, the second channel monitoring budget includes a channel monitoring budget corresponding to the second cell, and the second cell is a cell different from the first cell in the M cells.

Optionally, the second cell is a cell different from the first cell in the M cells, and the first control resource includes any one of the following:

a control resource of the second cell;
a control resource usable for scheduling the first cell by the second cell;
a control resource dedicated to scheduling of the first cell by the second cell; and
a specific control resource of the second cell.

Optionally, the number of third blind detection objects is less than or equal to the channel monitoring budget corresponding to the second cell, the number of third blind detection objects is the number of blind detection objects within the first control resource on which the terminal needs to perform the first operation within N3 time units, and the second cell is a cell different from the first cell in the M cells, where N3 is a positive integer.

Optionally, the M cells include the first cell and the second cell, and the channel monitoring budget corresponding to the second cell is the channel monitoring budget corresponding to the first cell.

Optionally, the M cells include a third cell, and a channel monitoring budget corresponding to the third cell is a third channel monitoring budget determined based on at least one of the following:

a channel monitoring budget supported by the terminal;
a pre-configured channel monitoring budget;
a protocol-predefined channel monitoring budget;
a channel monitoring budget configured by the network-side device;
a fourth channel monitoring budget determined based on a second control resource; and
a seventh channel monitoring budget determined based on at least one of at least one fifth channel monitoring budget and at least one sixth channel monitoring budget, where the fifth channel monitoring budget is a channel monitoring budget corresponding to a fourth cell, the fourth cell is a cell different from the third cell in the M cells, and the sixth channel monitoring budget is a joint channel monitoring budget corresponding to at least two cells in the M cells.

Optionally, the third channel monitoring budget is one of the following:

the channel monitoring budget supported by the terminal;
the pre-configured channel monitoring budget;
the protocol-predefined channel monitoring budget;
the channel monitoring budget configured by the network-side device;
the fourth channel monitoring budget;
the seventh channel monitoring budget; and
a maximum, minimum, average, or weighted value of at least two of the following: the channel monitoring budget supported by the terminal, the pre-configured channel monitoring budget, the protocol-predefined channel monitoring budget, the channel monitoring budget configured by the network-side device, the fourth channel monitoring budget, and the seventh channel monitoring budget.

Optionally, the fourth channel monitoring budget is a maximum, minimum, average, or weighted value of the N4 quantities of the fourth blind detection objects.

Each quantity of the fourth blind detection objects is determined based on blind detection objects in at least one control resource of the second control resources in each time unit of N4 time units.

Optionally, each quantity of the fourth blind detection objects is the number of blind detection objects in a third control sub-resource on which the terminal needs to perform the first operation in each time unit of N4 time units, and the third control sub-resource includes one control resource of the second control resources;
or

each quantity of the fourth blind detection objects is a weighted value of the number of blind detection objects in a fourth control sub-resource on which the terminal needs to perform the first operation in each time unit of N4 time units, and the fourth control sub-resource includes at least two of the second control resources.

Optionally, the N4 time units are N4 time units corresponding to a first reference subcarrier spacing.

Optionally, the M cells include the first cell, and the first reference subcarrier spacing is one of the following:

a subcarrier spacing of a cell in the M cells;
a maximum subcarrier spacing in subcarrier spacings of the M cells;
a minimum subcarrier spacing in subcarrier spacings of the M cells;
a pre-configured subcarrier spacing;
a protocol-predefined subcarrier spacing; and
a subcarrier spacing configured by the network-side device.

Optionally, the third cell is the first cell, the fourth channel monitoring budget is a maximum value of the N4 quantities of fourth blind detection objects, and the second control resource includes all CSSs of the first cell.

Optionally, the third cell is the first cell, and the second control resource includes at least one of the following:

at least one control resource usable for self-scheduling in the first cell;
at least one control resource dedicated to self-scheduling in the first cell;
at least one common control resource of the first cell; and
at least one dedicated control resource of the first cell.

Optionally, the M cells do not include the first cell, and the first reference subcarrier spacing is one of the following:

a subcarrier spacing of the first cell;
a subcarrier spacing of a cell in the M cells;
the subcarrier spacing of the first cell and a maximum subcarrier spacing of subcarrier spacings of the M cells;
the subcarrier spacing of the first cell and a minimum subcarrier spacing of subcarrier spacings of the M cells;
a pre-configured subcarrier spacing;
a protocol-predefined subcarrier spacing; and
a subcarrier spacing configured by the network-side device.

Optionally, the N4 time units are consecutive N4 time units.

Optionally, the N4 time units are N4 consecutive time units within a preset time range.

Optionally, the third cell is different from the first cell, and the second control resource includes at least one of the following:

at least one control resource in control resources usable for scheduling the first cell on the third cell; and
at least one control resource in control resources dedicated to scheduling of the first cell on the third cell.

Optionally, the third cell is different from the first cell, and the second control resource includes at least one of the following:

at least one control resource in control resources unusable for scheduling the first cell in the third cell;
at least one control resource in control resources used for self-scheduling in the third cell;
at least one control resource in control resources used for cross-carrier scheduling in the third cell;
at least one control resource or a specific control resource used for scheduling the first cell; and
at least one control resource or a specific control resource in the third cell.

Optionally, the joint channel monitoring budget corresponding to at least two cells in the M cells includes a joint channel monitoring budget between N cells, the N cells are any N cells in the M cells, N is an integer greater than 1 and less than or equal to M, and the joint channel monitoring budget between the N cells is a first joint channel monitoring budget determined based on at least one of the following:

a joint channel monitoring budget supported by the terminal;
a pre-configured joint channel monitoring budget;
a protocol-predefined joint channel monitoring budget;
a joint channel monitoring budget configured by the network-side device;
a second joint channel monitoring budget determined based on a control resource corresponding to at least one cell in the N cells;
a third joint channel monitoring budget determined based on a reference configuration; and
a fourth joint channel monitoring budget determined based on a channel monitoring budget corresponding to at least one cell in the N cells.

Optionally, the first joint channel monitoring budget includes one of the following:

a joint channel monitoring budget supported by the terminal;
a pre-configured joint channel monitoring budget;
a protocol-predefined joint channel monitoring budget;
a joint channel monitoring budget configured by the network-side device;
the second joint channel monitoring budget;
a third joint channel monitoring budget;
a fourth joint channel monitoring budget; and
a maximum, minimum, average, or weighted value of at least two of the joint channel monitoring budget supported by the terminal, the pre-configured joint channel monitoring budget, the protocol-predefined joint channel monitoring budget, the joint channel monitoring budget configured by the network-side device, the second joint channel monitoring budget, the third joint channel monitoring budget, and the fourth joint channel monitoring budget.

Optionally, the N cells include the first cell, and the second joint channel monitoring budget includes one of the following: a carrier aggregation-limited monitoring budget corresponding to the first cell and a non-carrier aggregation-limited monitoring budget corresponding to the first cell.

Optionally, the reference configuration includes a second reference subcarrier spacing.

Optionally, the third joint channel monitoring budget includes a maximum channel monitoring budget in at least one channel monitoring budget corresponding to the second reference subcarrier spacing.

Optionally, the second reference subcarrier spacing includes one of the following:

a subcarrier spacing of a cell of the N cells;
a maximum subcarrier spacing in subcarrier spacings of the N cells; and
a minimum subcarrier spacing in subcarrier spacings of the N cells.

The channel monitoring apparatus in this embodiment of this application may be an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The channel monitoring apparatus provided in this embodiment of this application is capable of implementing the processes implemented in the method embodiments in FIG. 5, with the same technical effects achieved. To avoid repetition, details are not described herein again.

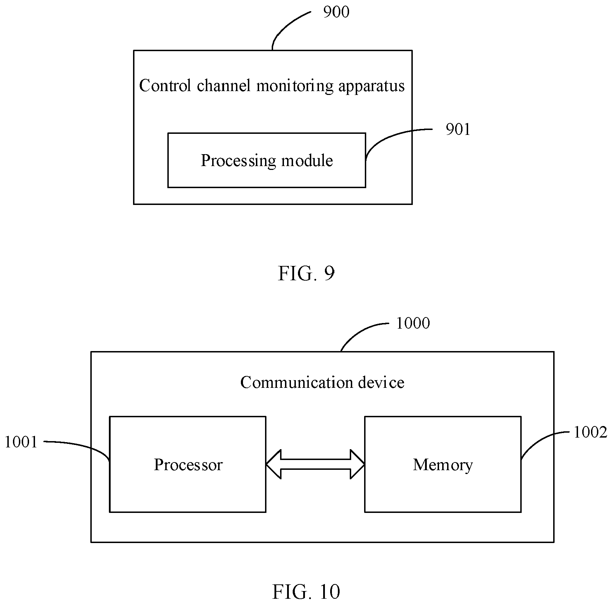

Referring to FIG. 9, FIG. 9 is a structural diagram of a control channel monitoring apparatus according to an embodiment of this application. As shown in FIG. 9, the control channel monitoring apparatus 900 includes:

a processing module 901, configured to configure or allocate a first control resource according to a second channel monitoring budget.

The second channel monitoring budget includes at least one channel monitoring budget of a first channel monitoring budget, a first cell supports being scheduled by M cells, and M is an integer greater than 1;

the M cells include the first cell, and the first channel monitoring budget includes at least one of the following: a channel monitoring budget corresponding to at least one cell in the M cells, and a joint channel monitoring budget corresponding to at least two cells in the M cells; or
the M cells do not include the first cell, and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells.

Optionally, the M cells include the first cell, and the second channel monitoring budget includes a channel monitoring budget corresponding to the first cell.

Optionally, the first control resource includes one of the following:

a control resource of the first cell;
a control resource usable for self-scheduling of the first cell;
a control resource dedicated to self-scheduling of the first cell; and

a specific control resource of the first cell.

Optionally, the first control resource includes one of the following:

at least one common search space CSS of the first cell;
at least one UE-specific search space USS of the first cell;
at least one CSS and at least one USS that are of the first cell; and
a specific search space SS of the first cell.

Optionally, the number of first blind detection objects is less than or equal to the channel monitoring budget corresponding to the first cell; the number of first blind detection objects is the number of blind detection objects within the first control resources on which a terminal needs to perform the first operation within N1 time units, where N1 is a positive integer; and the first operation includes at least one of the following operations: allocation and monitoring.
Optionally, the second channel monitoring budget includes a channel monitoring budget corresponding to the second cell, and the second cell is a cell different from the first cell in the M cells.
Optionally, the second cell is a cell different from the first cell in the M cells, and the first control resource includes any one of the following:

a control resource of the second cell;
a control resource usable for scheduling the first cell by the second cell;
a control resource dedicated to scheduling of the first cell by the second cell; and
a specific control resource of the second cell.

Optionally, the number of third blind detection objects is less than or equal to the channel monitoring budget corresponding to the second cell; the number of third blind detection objects is the number of blind detection objects within the first control resources on which a terminal needs to perform the first operation within N3 time units, where N3 is a positive integer; the second cell is a cell different from the first cell in the M cells; and the first operation includes at least one of the following operations: allocation and monitoring.
Optionally, the M cells include the first cell and the second cell, and the channel monitoring budget corresponding to the second cell is the channel monitoring budget corresponding to the first cell.
Optionally, the M cells include a third cell, and a channel monitoring budget corresponding to the third cell is a third channel monitoring budget determined based on at least one of the following:

a channel monitoring budget supported by a terminal;
a pre-configured channel monitoring budget;
a protocol-predefined channel monitoring budget;
a channel monitoring budget configured by the network-side device;
a fourth channel monitoring budget determined based on a second control resource; and
a seventh channel monitoring budget determined based on at least one of at least one fifth channel monitoring budget and at least one sixth channel monitoring budget, where the fifth channel monitoring budget is a channel monitoring budget corresponding to a fourth cell, the fourth cell is a cell different from the third cell in the M cells, and the sixth channel monitoring budget is a joint channel monitoring budget corresponding to at least two cells in the M cells.

Optionally, the third channel monitoring budget is one of the following:

the channel monitoring budget supported by the terminal;
the pre-configured channel monitoring budget;
the protocol-predefined channel monitoring budget;
the channel monitoring budget configured by the network-side device;
the fourth channel monitoring budget;
the seventh channel monitoring budget; and
a maximum, minimum, average, or weighted value of at least two of the following: the channel monitoring budget supported by the terminal, the pre-configured channel monitoring budget, the protocol-predefined channel monitoring budget, the channel monitoring budget configured by the network-side device, the fourth channel monitoring budget, and the seventh channel monitoring budget.

Optionally, the fourth channel monitoring budget is a maximum, minimum, average, or weighted value of the N4 quantities of the fourth blind detection objects.

Each quantity of the fourth blind detection objects is either the number of blind detection objects in the third control sub-resource on which the terminal needs to perform the first operation in each time unit of the N4 time units, or a weighted value of the number of blind detection objects in the fourth control sub-resource on which the terminal needs to perform the first operation in each time unit of the N4 time units. The third control sub-resource includes one control resource in the second control resource, and the fourth control sub-resource includes at least two control resources in the second control resource.

Optionally, the N4 time units are N4 time units corresponding to a first reference subcarrier spacing.

Optionally, the M cells include the first cell, and the first reference subcarrier spacing is one of the following:

a subcarrier spacing of a cell in the M cells;
a maximum subcarrier spacing in subcarrier spacings of the M cells;
a minimum subcarrier spacing in subcarrier spacings of the M cells;
a pre-configured subcarrier spacing;
a protocol-predefined subcarrier spacing; and
a subcarrier spacing configured by the network-side device.

Optionally, the third cell is the first cell, the fourth channel monitoring budget is a maximum value of the N4 quantities of fourth blind detection objects, and the second control resource includes all CSSs of the first cell.

Optionally, the third cell is the first cell, and the second control resource includes at least one of the following:

at least one control resource usable for self-scheduling in the first cell;
at least one control resource dedicated to self-scheduling in the first cell;
at least one common control resource of the first cell; and
at least one dedicated control resource of the first cell.

Optionally, the M cells do not include the first cell, and the first reference subcarrier spacing is one of the following:

a subcarrier spacing of the first cell;
a subcarrier spacing of a cell in the M cells;
the subcarrier spacing of the first cell and a maximum subcarrier spacing of subcarrier spacings of the M cells;
the subcarrier spacing of the first cell and a minimum subcarrier spacing of subcarrier spacings of the M cells;
a pre-configured subcarrier spacing;
a protocol-predefined subcarrier spacing; and
a subcarrier spacing configured by the network-side device.

Optionally, the N4 time units are consecutive N4 time units.

Optionally, the N4 time units are N4 consecutive time units within a preset time range.

Optionally, the third cell is different from the first cell, and the second control resource includes at least one of the following:

at least one control resource in control resources usable for scheduling the first cell on the third cell; and
at least one control resource in control resources dedicated to scheduling of the first cell on the third cell.

Optionally, the third cell is different from the first cell, and the second control resource includes at least one of the following:

at least one control resource in control resources unusable for scheduling the first cell in the third cell;
at least one control resource in control resources used for self-scheduling in the third cell;
at least one control resource in control resources used for cross-carrier scheduling in the third cell;
at least one control resource or a specific control resource used for scheduling the first cell; and
at least one control resource or a specific control resource in the third cell.

Optionally, the joint channel monitoring budget corresponding to at least two cells in the M cells includes a joint channel monitoring budget between N cells, the N cells are any N cells in the M cells, N is an integer greater than 1 and less than or equal to M, and the joint channel monitoring budget between the N cells is a first joint channel monitoring budget determined based on at least one of the following:

a joint channel monitoring budget supported by a terminal;

a pre-configured joint channel monitoring budget;

a protocol-predefined joint channel monitoring budget;

a joint channel monitoring budget configured by the network-side device;

a second joint channel monitoring budget determined based on a control resource corresponding to at least one cell in the N cells;

a third joint channel monitoring budget determined based on a reference configuration; and

a fourth joint channel monitoring budget determined based on a channel monitoring budget corresponding to at least one cell in the N cells.

Optionally, the first joint channel monitoring budget includes one of the following:

a joint channel monitoring budget supported by a terminal;

a pre-configured joint channel monitoring budget;

a protocol-predefined joint channel monitoring budget;

a joint channel monitoring budget configured by the network-side device;

the second joint channel monitoring budget;

a third joint channel monitoring budget;

a fourth joint channel monitoring budget; and

a maximum, minimum, average, or weighted value of at least two of the joint channel monitoring budget supported by the terminal, the pre-configured joint channel monitoring budget, the protocol-predefined joint channel monitoring budget, the joint channel monitoring budget configured by the network-side device, the second joint channel monitoring budget, the third joint channel monitoring budget, and the fourth joint channel monitoring budget.

Optionally, the N cells include the first cell, and the second joint channel monitoring budget includes one of the following: a carrier aggregation-limited monitoring budget corresponding to the first cell and a non-carrier aggregation-limited monitoring budget corresponding to the first cell.

Optionally, the reference configuration includes a second reference subcarrier spacing.

Optionally, the third joint channel monitoring budget includes a maximum channel monitoring budget in at least one channel monitoring budget corresponding to the second reference subcarrier spacing.

Optionally, the second reference subcarrier spacing includes one of the following:

a subcarrier spacing of a cell of the N cells;

a maximum subcarrier spacing in subcarrier spacings of the N cells; and

a minimum subcarrier spacing in subcarrier spacings of the N cells.

The channel monitoring apparatus in this embodiment of this application may be an apparatus, or an apparatus or electric device having an operating system, or may be a component, an integrated circuit, or a chip in the network-side device. For example, the network-side device may include but is not limited to the type of the network-side device 12 listed above.

The control channel monitoring apparatus provided in this embodiment of this application is capable of implementing the processes implemented in the method embodiments in FIG. 6, with the same technical effects achieved. To avoid repetition, details are not described herein again.

Optionally, as shown in FIG. 10, an embodiment of this application further provides a communication device 1000, including a processor 1001, a memory 1002, and a program or instructions stored in the memory 1002 and capable of running on the processor 1001. For example, when the communication device 1000 is a terminal and when the program or the instructions are executed by the processor 1001, the processes of the foregoing embodiment of the control channel monitoring method on the terminal side are implemented, with the same technical effects achieved. When the communication device 1000 is a network-side device and when the program or the instructions are executed by the processor 1001, the processes of the foregoing embodiment of the control channel monitoring method on the network-side device side are implemented, with the same technical effects achieved. To avoid repetition, details are not described herein again.

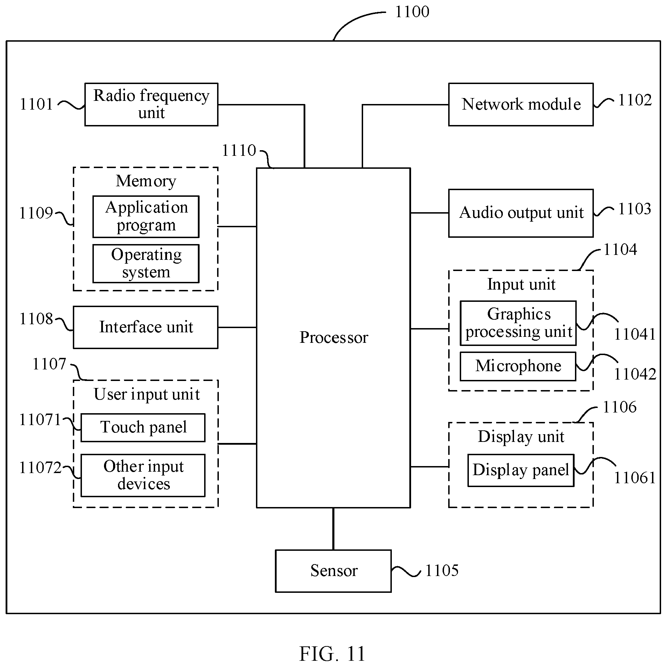

An embodiment of this application further provides a terminal, including a processor and a communication interface, where the processor is configured to obtain a first channel monitoring budget; where a first cell supports being scheduled by M cells, and M is an integer greater than 1; the M cells include the first cell and the first channel monitoring budget includes at least one of the following: a channel monitoring budget corresponding to at least one cell in the M cells, and a joint channel monitoring budget corresponding to at least two cells in the M cells; or, the M cells do not include the first cell and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells; and the communication interface is configured to perform a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring. The terminal embodiments correspond to the foregoing terminal-side method embodiments, and the implementation processes and implementations of the foregoing method embodiments can be applied to the terminal embodiments, with the same technical effects achieved. Specifically, FIG. 11 is a schematic diagram of a hardware structure of a terminal for implementing the embodiments of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than those shown in FIG. 11, or a combination of some components, or the components disposed differently. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then sends the downlink data to the processor 1110 for processing; and also sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may include a program or instruction storage area and a data storage area. The program or instruction storage area may store an operating system, an application program or instruction required by at least one function (for example, a sound playback function or an image playback function), and the like. In addition, the memory 1109 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 1110 may include one or more processing units. Optionally, an application processor and a modem processor may be integrated in the processor 1110. The application processor primarily processes an operating system, user interfaces, application programs or instructions, and the like. The modem processor primarily processes radio communication, for example, being a baseband processor. It can be understood that the modem processor may alternatively be not integrated in the processor 1110.

The processor 1110 is configured to obtain a first channel monitoring budget; where a first cell supports being scheduled by M cells, and M is an integer greater than 1; the M cells include the first cell and the first channel monitoring budget includes at least one of the following: a channel monitoring budget corresponding to at least one cell in the M cells, and a joint channel monitoring budget corresponding to at least two cells in the M cells; or, the M cells do not include the first cell and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells.

The radio frequency unit 1101 is configured to perform a first operation on at least part of control resources in first control resources according to a second channel monitoring budget; where the second channel monitoring budget includes at least one channel monitoring budget in the first channel monitoring budget, and the first operation includes at least one of the following operations: allocation and monitoring.

In this embodiment of this application, in a case that the first cell supports being scheduled by multiple cells, the terminal allocates and monitors at least part of control resources in the first control resources based on at least one channel monitoring budget in the first channel monitoring budget. This can not only alleviate the problem of scheduling congestion of the scheduling cell of the first cell, but also reduce demodulation complexity for the terminal during scheduling of the first cell by multiple cells.

Optionally, the M cells include the first cell, and the second channel monitoring budget includes a channel monitoring budget corresponding to the first cell.

Optionally, the first control resource includes one of the following:

a control resource of the first cell;
a control resource usable for self-scheduling of the first cell;
a control resource dedicated to self-scheduling of the first cell; and a specific control resource of the first cell.

Optionally, the first control resource includes one of the following:

at least one common search space CSS of the first cell;
at least one UE-specific search space USS of the first cell;
at least one CSS and at least one USS that are of the first cell; and
a specific search space SS of the first cell.

Optionally, the number of first blind detection objects is less than or equal to the channel monitoring budget corresponding to the first cell, and the number of first blind detection objects is the number of blind detection objects within the first control resource on which the terminal needs to perform the first operation within N1 time units, where N1 is a positive integer.

Optionally, in a case that the number of second blind detection objects is greater than the channel monitoring budget corresponding to the first cell, the terminal performs at least one of the following:

dropping at least part of blind detection objects within at least part of control resources in the first control resources; and
performing the first operation on at least part of blind detection objects within at least part of control resources in the first control resources; where
the number of second blind detection objects is the number of blind detection objects within the first control resource on which the terminal needs to perform the first operation within N2 time units, where N2 is a positive integer.

Optionally, the dropping at least part of blind detection objects within at least part of control resources in the first control resources includes one of the following:

dropping at least part of blind detection objects in at least one USS of the first control resources;
dropping at least part of blind detection objects in a dedicated control resource in the first control resources; and
after mapping of blind detection objects in a first control sub-resource according to a first preset rule, if the number of blind detection objects to be monitored by the terminal is greater than the channel monitoring budget corresponding to the first cell, dropping at least part of blind detection objects in the first control sub-resource, where the first control sub-resource includes at least part of control resources in the first control resources.

Optionally, the performing the first operation on at least part of blind detection objects within at least part of control resources in the first control resources includes one of the following:

performing the first operation on at least part of blind detection objects in at least one CSS of the first control resources; and
after mapping of blind detection objects in a second control sub-resource according to a second preset rule, if the number of blind detection objects to be monitored by the terminal is less than or equal to the channel monitoring budget corresponding to the first cell, performing the first operation on at least part of blind detection objects in the second control sub-resource, where the second control sub-resource includes at least part of control resources in the first control resources.

Optionally, the second channel monitoring budget includes a channel monitoring budget corresponding to the second cell, and the second cell is a cell different from the first cell in the M cells.

Optionally, the second cell is a cell different from the first cell in the M cells, and the first control resource includes any one of the following:

a control resource of the second cell;
a control resource usable for scheduling the first cell by the second cell;
a control resource dedicated to scheduling of the first cell by the second cell; and
a specific control resource of the second cell.

Optionally, the number of third blind detection objects is less than or equal to the channel monitoring budget corresponding to the second cell, the number of third blind detection objects is the number of blind detection objects within the first control resource on which the terminal needs to perform the first operation within N3 time units, and the second cell is a cell different from the first cell in the M cells, where N3 is a positive integer.

Optionally, the M cells include the first cell and the second cell, and the channel monitoring budget corresponding to the second cell is the channel monitoring budget corresponding to the first cell.

Optionally, the M cells include a third cell, and a channel monitoring budget corresponding to the third cell is a third channel monitoring budget determined based on at least one of the following:

a channel monitoring budget supported by the terminal;
a pre-configured channel monitoring budget;
a protocol-predefined channel monitoring budget;
a channel monitoring budget configured by the network-side device;
a fourth channel monitoring budget determined based on a second control resource; and
a seventh channel monitoring budget determined based on at least one of at least one fifth channel monitoring budget and at least one sixth channel monitoring budget, where the fifth channel monitoring budget is a channel monitoring budget corresponding to a fourth cell, the fourth cell is a cell different from the third cell in the M cells, and the sixth channel monitoring budget is a joint channel monitoring budget corresponding to at least two cells in the M cells.

Optionally, the third channel monitoring budget is one of the following:

the channel monitoring budget supported by the terminal;
the pre-configured channel monitoring budget;
the protocol-predefined channel monitoring budget;
the channel monitoring budget configured by the network-side device;
the fourth channel monitoring budget;
the seventh channel monitoring budget; and
a maximum, minimum, average, or weighted value of at least two of the following: the channel monitoring budget supported by the terminal, the pre-configured channel monitoring budget, the protocol-predefined channel monitoring budget, the channel monitoring budget configured by the network-side device, the fourth channel monitoring budget, and the seventh channel monitoring budget.

Optionally, the fourth channel monitoring budget is a maximum, minimum, average, or weighted value of the N4 quantities of the fourth blind detection objects.
each quantity of the fourth blind detection objects is determined based on blind detection objects in at least one control resource of the second control resources in each time unit of N4 time units.

Optionally, each quantity of the fourth blind detection objects is the number of blind detection objects in a third control sub-resource on which the terminal needs to perform the first operation in each time unit of N4 time units, and the third control sub-resource includes one control resource of the second control resources;
or
each quantity of the fourth blind detection objects is a weighted value of the number of blind detection objects in a fourth control sub-resource on which the terminal needs to perform the first operation in each time unit of N4 time units, and the fourth control sub-resource includes at least two of the second control resources.

Optionally, the N4 time units are N4 time units corresponding to a first reference subcarrier spacing.

Optionally, the M cells include the first cell, and the first reference subcarrier spacing is one of the following:

a subcarrier spacing of a cell in the M cells;
a maximum subcarrier spacing in subcarrier spacings of the M cells;
a minimum subcarrier spacing in subcarrier spacings of the M cells;
a pre-configured subcarrier spacing;
a protocol-predefined subcarrier spacing; and
a subcarrier spacing configured by the network-side device.

Optionally, the third cell is the first cell, the fourth channel monitoring budget is a maximum value of the N4 quantities of fourth blind detection objects, and the second control resource includes all CSSs of the first cell.

Optionally, the third cell is the first cell, and the second control resource includes at least one of the following:

at least one control resource usable for self-scheduling in the first cell;
at least one control resource dedicated to self-scheduling in the first cell;
at least one common control resource of the first cell; and
at least one dedicated control resource of the first cell.

Optionally, the M cells do not include the first cell, and the first reference subcarrier spacing is one of the following:

a subcarrier spacing of the first cell;
a subcarrier spacing of a cell in the M cells;
the subcarrier spacing of the first cell and a maximum subcarrier spacing of subcarrier spacings of the M cells;
the subcarrier spacing of the first cell and a minimum subcarrier spacing of subcarrier spacings of the M cells;
a pre-configured subcarrier spacing;
a protocol-predefined subcarrier spacing; and
a subcarrier spacing configured by the network-side device.

Optionally, the N4 time units are consecutive N4 time units.

Optionally, the N4 time units are N4 consecutive time units within a preset time range.

Optionally, the third cell is different from the first cell, and the second control resource includes at least one of the following:

at least one control resource in control resources usable for scheduling the first cell on the third cell; and
at least one control resource in control resources dedicated to scheduling of the first cell on the third cell.

Optionally, the third cell is different from the first cell, and the second control resource includes at least one of the following:

at least one control resource in control resources unusable for scheduling the first cell in the third cell;
at least one control resource in control resources used for self-scheduling in the third cell;
at least one control resource in control resources used for cross-carrier scheduling in the third cell;
at least one control resource or a specific control resource used for scheduling the first cell; and
at least one control resource or a specific control resource in the third cell.

Optionally, the joint channel monitoring budget corresponding to at least two cells in the M cells includes a joint channel monitoring budget between N cells, the N cells are any N cells in the M cells, N is an integer greater than 1 and less than or equal to M, and the joint channel monitoring budget between the N cells is a first joint channel monitoring budget determined based on at least one of the following:

a joint channel monitoring budget supported by the terminal;
a pre-configured joint channel monitoring budget;
a protocol-predefined joint channel monitoring budget;
a joint channel monitoring budget configured by the network-side device;
a second joint channel monitoring budget determined based on a control resource corresponding to at least one cell in the N cells;
a third joint channel monitoring budget determined based on a reference configuration; and
a fourth joint channel monitoring budget determined based on a channel monitoring budget corresponding to at least one cell in the N cells.

Optionally, the first joint channel monitoring budget includes one of the following:

a joint channel monitoring budget supported by the terminal;
a pre-configured joint channel monitoring budget;
a protocol-predefined joint channel monitoring budget;
a joint channel monitoring budget configured by the network-side device;
the second joint channel monitoring budget;

a third joint channel monitoring budget;

a fourth joint channel monitoring budget; and

a maximum, minimum, average, or weighted value of at least two of the joint channel monitoring budget supported by the terminal, the pre-configured joint channel monitoring budget, the protocol-predefined joint channel monitoring budget, the joint channel monitoring budget configured by the network-side device, the second joint channel monitoring budget, the third joint channel monitoring budget, and the fourth joint channel monitoring budget.

Optionally, the N cells include the first cell, and the second joint channel monitoring budget includes one of the following: a carrier aggregation-limited monitoring budget corresponding to the first cell and a non-carrier aggregation-limited monitoring budget corresponding to the first cell.

Optionally, the reference configuration includes a second reference subcarrier spacing.

Optionally, the third joint channel monitoring budget includes a maximum channel monitoring budget in at least one channel monitoring budget corresponding to the second reference subcarrier spacing.

Optionally, the second reference subcarrier spacing includes one of the following:

a subcarrier spacing of a cell of the N cells;

a maximum subcarrier spacing in subcarrier spacings of the N cells; and

a minimum subcarrier spacing in subcarrier spacings of the N cells.

An embodiment of this application further provides a network-side device, including a processor and a communication interface, where the communication interface is configured to configure or allocate a first control resource according to a second channel monitoring budget, where the second channel monitoring budget includes at least one channel monitoring budget of a first channel monitoring budget, a first cell supports being scheduled by M cells, and M is an integer greater than 1; the M cells include the first cell, and the first channel monitoring budget includes at least one of the following: a channel monitoring budget corresponding to at least one cell in the M cells, and a joint channel monitoring budget corresponding to at least two cells in the M cells; or the M cells do not include the first cell, and the first channel monitoring budget includes at least one of the following: a channel monitoring budget corresponding to the first cell, a channel monitoring budget corresponding to at least one cell in the M cells, and a joint channel monitoring budget corresponding to at least two cells in the M cells. The network-side device embodiments correspond to the foregoing network-side device method embodiments, and the implementation processes and implementations of the foregoing method embodiments can be applied to the network-side device embodiments, with the same technical effects achieved.

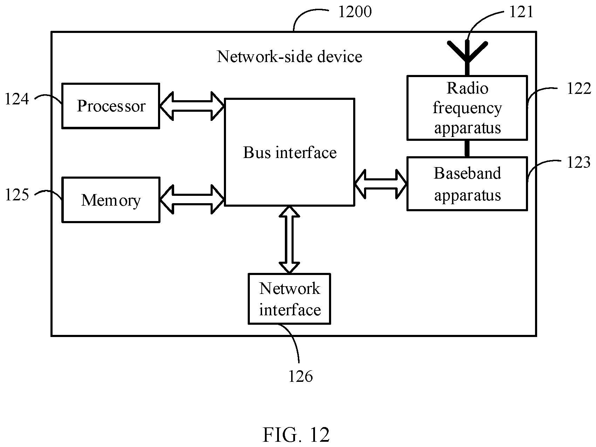

Specifically, an embodiment of this application further provides a network-side device. As shown in FIG. 12, the network-side device 1200 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information out by using the antenna 121.

The frequency band processing apparatus may be located in the baseband apparatus 123. The method performed by the network-side device in the foregoing embodiments may be implemented in the baseband apparatus 123, and the baseband apparatus 123 includes a processor 124 and a memory 125.

The baseband apparatus 123 may include, for example, at least one baseband processing unit, where a plurality of chips are disposed on the baseband processing unit. As shown in FIG. 12, one of the chips is, for example, the processor 124, connected to the memory 125, to invoke a program in the memory 125 to perform the operation of the network-side device shown in the foregoing method embodiment.

The baseband apparatus 123 may further include a network interface 126, configured to exchange information with the radio frequency apparatus 122, where the interface is, for example, a common public radio interface (common public radio interface, CPRI for short).

Specifically, the network-side device in this embodiment of the present invention further includes: instructions or a program stored in the memory 125 and capable of running on the processor 124. The processor 124 invokes the instructions or program in the memory 125 to execute the method executed by the modules shown in FIG. 9, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the control channel monitoring method on the terminal side can be implemented, or the processes of the foregoing embodiment of the control channel monitoring method on the network-side device side can be implemented, with the same technical effects achieved. To avoid repetition, details are not described herein again.

The processor is a processor in the terminal described in the foregoing embodiments, or a processor in the network-side device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiment of the control channel monitoring method on the terminal side or the processes of the foregoing embodiment of the control channel monitoring method on the network-side device side, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A control channel monitoring method, comprising:

   obtaining, by a terminal, a first channel monitoring budget; wherein a first cell supports being scheduled by M cells, and M is an integer greater than 1; the M cells comprise the first cell and the first channel monitoring budget comprises at least one of the following: a channel monitoring budget corresponding to at least one cell in the M cells, and a joint channel monitoring budget corresponding to at least two cells in the M cells; or, the M cells do not comprise the first cell and the first channel monitoring budget comprises at least one of the following: a channel monitoring budget corresponding to the first cell, a channel monitoring budget corresponding to at least one cell in the M cells, and a joint channel monitoring budget corresponding to at least two cells in the M cells; and
   performing, by the terminal, a first operation on at least part of control resources in first control resources according to a second channel monitoring budget; wherein the second channel monitoring budget comprises at least one channel monitoring budget in the first channel monitoring budget, and the first operation comprises at least one of the following operations: allocation and monitoring.

2. The method according to claim 1, wherein the M cells comprise the first cell, and the second channel monitoring budget comprises the channel monitoring budget corresponding to the first cell.

3. The method according to claim 1 or 2, wherein the first control resource comprises one of the following:

   a control resource of the first cell;
   a control resource usable for self-scheduling of the first cell;
   a control resource dedicated to self-scheduling of the first cell; and
   a specific control resource of the first cell.

4. The method according to claim 1 or 2, wherein the first control resource comprises one of the following:

   at least one common search space CSS of the first cell;
   at least one UE-specific search space USS of the first cell;
   at least one CSS and at least one USS that are of the first cell; and
   a specific search space SS of the first cell.

5. The method according to claim 1 or 2, wherein the number of first blind detection objects is less than or equal to the channel monitoring budget corresponding to the first cell, and the number of first blind detection objects is the number of blind detection objects within the first control resource on which the terminal needs to perform the first operation within N1 time units, wherein N1 is a positive integer.

6. The method according to claim 1 or 2, wherein in a case that the number of second blind detection objects is greater than the channel monitoring budget corresponding to the first cell, the terminal performs at least one of the following:

   dropping at least part of blind detection objects within at least part of control resources in the first control resources; and
   performing the first operation on at least part of blind detection objects within at least part of control resources in the first control resources; wherein
   the number of second blind detection objects is the number of blind detection objects within the first control resource on which the terminal needs to perform the first operation within N2 time units, wherein N2 is a positive integer.

7. The method according to claim 6, wherein the dropping at least part of blind detection objects within at least part of control resources in the first control resources comprises one of the following:

   droppingat least part of blind detection objects in at least one USS of the first control resources;
   dropping at least part of blind detection objects in a dedicated control resource in the first control resources; and
   after mapping of blind detection objects in a first control sub-resource according to a first preset rule, if the number of blind detection objects to be monitored by the terminal is greater than the channel monitoring budget corresponding to the first cell, dropping at least part of blind detection objects in the first control sub-resource, wherein the first control sub-resource comprises at least part of control resources in the first control resources.

8. The method according to claim 6, wherein the performing the first operation on at least part of blind detection objects within at least part of control resources in the first control resources comprises one of the following:

   performing the first operation on at least part of blind detection objects in at least one CSS of the first control resources; and
   after mapping of blind detection objects in a second control sub-resource according to a second preset rule, if the number of blind detection objects to be monitored by the terminal is less than or equal to the channel monitoring budget corresponding to the first cell, performing the first operation on at least part of blind detection objects in the second control sub-resource, wherein the second control sub-resource comprises at least part of control resources in the first control resources.

9. The method according to claim 1, wherein the second channel monitoring budget comprises a channel monitoring budget corresponding to a second cell, and the second cell is a cell different from the first cell in the M cells.

10. The method according to claim 1 or 9, wherein the second cell is a cell different from the first cell in the M cells, and the first control resource comprises any one of the following:

   a control resource of the second cell;

a control resource usable for scheduling the first cell by the second cell;
a control resource dedicated to scheduling of the first cell by the second cell; and
a specific control resource of the second cell.

11. The method according to claim 1 or 9, wherein the number of third blind detection objects is less than or equal to the channel monitoring budget corresponding to the second cell, the number of third blind detection objects is the number of blind detection objects within the first control resource on which the terminal needs to perform the first operation within N3 time units, and the second cell is a cell different from the first cell in the M cells, wherein N3 is a positive integer.

12. The method according to claim 1 or 9, wherein the M cells comprise the first cell and the second cell, and the channel monitoring budget corresponding to the second cell comprises the channel monitoring budget corresponding to the first cell.

13. The method according to claim 1, wherein the M cells comprise a third cell, and a channel monitoring budget corresponding to the third cell is a third channel monitoring budget that is determined based on at least one of the following:

a channel monitoring budget supported by the terminal;
a pre-configured channel monitoring budget;
a protocol-predefined channel monitoring budget;
a channel monitoring budget configured by the network-side device;
a fourth channel monitoring budget determined based on a second control resource; and
a seventh channel monitoring budget determined based on at least one of at least one fifth channel monitoring budget and at least one sixth channel monitoring budget, wherein the fifth channel monitoring budget is a channel monitoring budget corresponding to a fourth cell, the fourth cell is a cell different from the third cell in the M cells, and the sixth channel monitoring budget is a joint channel monitoring budget corresponding to at least two cells in the M cells.

14. The method according to claim 13, wherein the third channel monitoring budget is one of the following:

the channel monitoring budget supported by the terminal;
the pre-configured channel monitoring budget;
the protocol-predefined channel monitoring budget;
the channel monitoring budget configured by the network-side device;
the fourth channel monitoring budget;
the seventh channel monitoring budget; and
a maximum, minimum, average, or weighted value of at least two of the following: the channel monitoring budget supported by the terminal, the pre-configured channel monitoring budget, the protocol-predefined channel monitoring budget, the channel monitoring budget configured by the network-side device, the fourth channel monitoring budget, and the seventh channel monitoring budget.

15. The method according to claim 13 or 14, wherein the fourth channel monitoring budget is a maximum, minimum, average, or weighted value of N4 quantities of fourth blind detection objects; wherein
each quantity of the fourth blind detection objects is determined based on blind detection objects in at least one control resource of the second control resources in each time unit of N4 time units.

16. The method according to claim 15, wherein each quantity of the fourth blind detection objects is the number of blind detection objects in a third control sub-resource on which the terminal needs to perform the first operation in each time unit of N4 time units, and the third control sub-resource comprises one control resource of the second control resources;
or
each quantity of the fourth blind detection objects is a weighted value of the number of blind detection objects in a fourth control sub-resource on which the terminal needs to perform the first operation in each time unit of N4 time units, and the fourth control sub-resource comprises at least two of the second control resources.

17. The method according to claim 15, wherein the N4 time units are N4 time units corresponding to a first reference subcarrier spacing.

18. The method according to claim 17, wherein the M cells comprise the first cell, and the first reference subcarrier spacing is one of the following:

a subcarrier spacing of a cell in the M cells;
a maximum subcarrier spacing in subcarrier spacings of the M cells;
a minimum subcarrier spacing in subcarrier spacings of the M cells;
a pre-configured subcarrier spacing;
a protocol-predefined subcarrier spacing; and
a subcarrier spacing configured by the network-side device.

19. The method according to claim 15, wherein the third cell is the first cell, the fourth channel monitoring budget is a maximum value of the N4 quantities of fourth blind detection objects, and the second control resource comprises all CSSs of the first cell.

20. The method according to claim 13, wherein the third cell is the first cell, and the second control resource comprises at least one of the following:

at least one control resource usable for self-scheduling in the first cell;
at least one control resource dedicated to self-scheduling in the first cell;
at least one common control resource of the first cell; and
at least one dedicated control resource of the first cell.

21. The method according to claim 17, wherein the M cells do not comprise the first cell, and the first reference subcarrier spacing is one of the following:

a subcarrier spacing of the first cell;
a subcarrier spacing of a cell in the M cells;
the subcarrier spacing of the first cell and a maximum subcarrier spacing of subcarrier spacings of the M cells;
the subcarrier spacing of the first cell and a minimum subcarrier spacing of subcarrier spacings of the M cells;
a pre-configured subcarrier spacing;
a protocol-predefined subcarrier spacing; and
a subcarrier spacing configured by the network-side device.

22. The method according to claim 15, wherein the N4 time units are consecutive N4 time units.

23. The method according to claim 22, wherein the N4 time units are consecutive N4 time units within a preset time range.

24. The method according to claim 13, wherein the third cell is different from the first cell, and the second control resource comprises at least one of the following:

at least one control resource in control resources usable for scheduling the first cell on the third cell; and
at least one control resource in control resources dedicated to scheduling of the first cell on the third cell.

25. The method according to claim 13, wherein the third cell is different from the first cell, and the second control resource comprises at least one of the following:

at least one control resource in control resources unusable for scheduling the first cell in the third cell;
at least one control resource in control resources used for self-scheduling in the third cell;
at least one control resource in control resources used for cross-carrier scheduling in the third cell;
at least one control resource or a specific control resource used for scheduling the first cell; and
at least one control resource or a specific control resource in the third cell.

26. The method according to claim 1, wherein the joint channel monitoring budget corresponding to at least two cells in the M cells comprises a joint channel monitoring budget corresponding to N cells, the N cells are any N cells in the M cells, N is an integer greater than 1 and less than or equal to M, and the joint channel monitoring budget corresponding to the N cells is a first joint channel monitoring budget determined based on at least one of the following:

a joint channel monitoring budget supported by the terminal;

a pre-configured joint channel monitoring budget;
a protocol-predefined joint channel monitoring budget;
a joint channel monitoring budget configured by a network-side device;
a second joint channel monitoring budget determined based on a control resource corresponding to at least one cell in the N cells;
a third joint channel monitoring budget determined based on a reference configuration; and
a fourth joint channel monitoring budget determined based on a channel monitoring budget corresponding to at least one cell in the N cells.

27. The method according to claim 26, wherein the first joint channel monitoring budget comprises one of the following:

a joint channel monitoring budget supported by the terminal;
a pre-configured joint channel monitoring budget;
a protocol-predefined joint channel monitoring budget;
a joint channel monitoring budget configured by the network-side device;
the second joint channel monitoring budget;
a third joint channel monitoring budget;
a fourth joint channel monitoring budget; and
a maximum, minimum, average, or weighted value of at least two of the following: the joint channel monitoring budget supported by the terminal, the pre-configured joint channel monitoring budget, the protocol-predefined joint channel monitoring budget, the joint channel monitoring budget configured by the network-side device, the second joint channel monitoring budget, the third joint channel monitoring budget, and the fourth joint channel monitoring budget.

28. The method according to claim 26, wherein the N cells comprise the first cell, and the second joint channel monitoring budget comprises one of the following: a carrier aggregation-limited monitoring budget corresponding to the first cell and a non-carrier aggregation-limited monitoring budget corresponding to the first cell.

29. The method according to claim 26, wherein the reference configuration comprises a second reference subcarrier spacing.

30. The method according to claim 29, wherein the third joint channel monitoring budget comprises a maximum channel monitoring budget in at least one channel monitoring budget corresponding to the second reference subcarrier spacing.

31. The method according to claim 29, wherein the second reference subcarrier spacing comprises one of the following:

a subcarrier spacing of a cell of the N cells;
a maximum subcarrier spacing in subcarrier spacings of the N cells; and
a minimum subcarrier spacing in subcarrier spacings of the N cells.

32. A control channel monitoring apparatus, comprising:

an obtaining module, configured to obtain a first channel monitoring budget; wherein a first cell supports being scheduled by M cells, and M is an integer greater than 1; the M cells comprise the first cell and the first channel monitoring budget comprises at least one of the following: a channel monitoring budget corresponding to at least one cell in the M cells, and a joint channel monitoring budget corresponding to at least two cells in the M cells; or, the M cells do not comprise the first cell and the first channel monitoring budget comprises at least one of the following: a channel monitoring budget corresponding to the first cell, a channel monitoring budget corresponding to at least one cell in the M cells, and a joint channel monitoring budget corresponding to at least two cells in the M cells; and
an operation module, configured to perform a first operation on at least part of control resources in first control resources according to a second channel monitoring budget; wherein the second channel monitoring budget comprises at least one channel monitoring budget in the first channel monitoring budget, and the first operation comprises at least one of the following operations: allocation and monitoring.

33. A control channel monitoring method, comprising:

configuring or allocating, by a network-side device, a first control resource according to a second channel monitoring budget; wherein

the second channel monitoring budget comprises at least one channel monitoring budget of a first channel monitoring budget, a first cell supports being scheduled by M cells, and M is an integer greater than 1;

the M cells comprise the first cell, and the first channel monitoring budget comprises at least one of the following: a channel monitoring budget corresponding to at least one cell in the M cells, and a joint channel monitoring budget corresponding to at least two cells in the M cells; or

the M cells do not comprise the first cell, and the first channel monitoring budget comprises at least one of the following: a channel monitoring budget corresponding to the first cell, a channel monitoring budget corresponding to at least one cell in the M cells, and a joint channel monitoring budget corresponding to at least two cells in the M cells.

34. The method according to claim 33, wherein the M cells comprise the first cell, and the second channel monitoring budget comprises the channel monitoring budget corresponding to the first cell.

35. The method according to claim 33 or 34, wherein the first control resource comprises one of the following:

a control resource of the first cell;
a control resource usable for self-scheduling of the first cell;
a control resource dedicated to self-scheduling of the first cell; and
a specific control resource of the first cell.

36. The method according to claim 33 or 34, wherein the first control resource comprises one of the following:

at least one common search space CSS of the first cell;
at least one UE-specific search space USS of the first cell;
at least one CSS and at least one USS that are of the first cell; and
a specific search space SS of the first cell.

37. The method according to claim 33 or 34, wherein the number of first blind detection objects is less than or equal to the channel monitoring budget corresponding to the first cell; the number of first blind detection objects is the number of blind detection objects within the first control resources on which a terminal needs to perform the first operation within N1 time units, wherein N1 is a positive integer; and the first operation comprises at least one of the following operations: allocation and monitoring.

38. The method according to claim 33, wherein the second channel monitoring budget comprises a channel monitoring budget corresponding to a second cell, and the second cell is a cell different from the first cell in the M cells.

39. The method according to claim 33 or 38, wherein the second cell is a cell different from the first cell in the M cells, and the first control resource comprises any one of the following:

a control resource of the second cell;
a control resource usable for scheduling the first cell by the second cell;
a control resource dedicated to scheduling of the first cell by the second cell; and
a specific control resource of the second cell.

40. The method according to claim 33 or 38, wherein the number of third blind detection objects is less than or equal to the channel monitoring budget corresponding to the second cell; the number of third blind detection objects is the number of blind detection objects within the first control resource on which a terminal needs to perform the first operation within N3 time units, wherein N3 is a positive integer; the second cell is a cell different from the first cell in the M cells; and the first operation comprises at least one of the following operations: allocation and monitoring.

41. The method according to claim 33 or 38, wherein the M cells comprise the first cell and the second cell, and the channel monitoring budget corresponding to the second cell comprises the channel monitoring budget corresponding to the first cell.

42. The method according to claim 33, wherein the M cells comprise a third cell, and a channel monitoring budget corresponding to the third cell is a third channel monitoring budget that is determined based on at least one of the following:

a channel monitoring budget supported by a terminal;
a pre-configured channel monitoring budget;
a protocol-predefined channel monitoring budget;
a channel monitoring budget configured by the network-side device;
a fourth channel monitoring budget determined based on a second control resource; and
a seventh channel monitoring budget determined based on at least one of at least one fifth channel monitoring budget and at least one sixth channel monitoring budget, wherein the fifth channel monitoring budget is a channel monitoring budget corresponding to a fourth cell, the fourth cell is a cell different from the third cell in the M cells, and the sixth channel monitoring budget is a joint channel monitoring budget corresponding to at least two cells in the M cells.

43. The method according to claim 42, wherein the third channel monitoring budget is one of the following:

the channel monitoring budget supported by the terminal;
the pre-configured channel monitoring budget;
the protocol-predefined channel monitoring budget;
the channel monitoring budget configured by the network-side device;
the fourth channel monitoring budget;
the seventh channel monitoring budget; and
a maximum, minimum, average, or weighted value of at least two of the following: the channel monitoring budget supported by the terminal, the pre-configured channel monitoring budget, the protocol-predefined channel monitoring budget, the channel monitoring budget configured by the network-side device, the fourth channel monitoring budget, and the seventh channel monitoring budget.

44. The method according to claim 42 or 43, wherein the fourth channel monitoring budget is a maximum, minimum, average, or weighted value of N4 quantities of fourth blind detection objects; wherein
each quantity of the fourth blind detection objects is determined based on blind detection objects in at least one control resource of the second control resources in each time unit of N4 time units.

45. The method according to claim 44, wherein each quantity of the fourth blind detection objects is the number of blind detection objects in a third control sub-resource on which the terminal needs to perform the first operation in each time unit of N4 time units, and the third control sub-resource comprises one control resource of the second control resources;
or
each quantity of the fourth blind detection objects is a weighted value of the number of blind detection objects in a fourth control sub-resource on which the terminal needs to perform the first operation in each time unit of N4 time units, and the fourth control sub-resource comprises at least two of the second control resources.

46. The method according to claim 44, wherein the N4 time units are N4 time units corresponding to a first reference subcarrier spacing.

47. The method according to claim 46, wherein the M cells comprise the first cell, and the first reference subcarrier spacing is one of the following:

a subcarrier spacing of a cell in the M cells;
a maximum subcarrier spacing in subcarrier spacings of the M cells;
a minimum subcarrier spacing in subcarrier spacings of the M cells;
a pre-configured subcarrier spacing;
a protocol-predefined subcarrier spacing; and
a subcarrier spacing configured by the network-side device.

48. The method according to claim 44, wherein the third cell is the first cell, the fourth channel monitoring budget is a maximum value of the N4 quantities of fourth blind detection objects, and the second control resource comprises all CSSs of the first cell.

49. The method according to claim 42, wherein the third cell is the first cell, and the second control resource comprises at least one of the following:

at least one control resource usable for self-scheduling in the first cell;
at least one control resource dedicated to self-scheduling in the first cell;
at least one common control resource of the first cell; and
at least one dedicated control resource of the first cell.

50. The method according to claim 46, wherein the M cells do not comprise the first cell, and the first reference subcarrier spacing is one of the following:

a subcarrier spacing of the first cell;
a subcarrier spacing of a cell in the M cells;
the subcarrier spacing of the first cell and a maximum subcarrier spacing of subcarrier spacings of the M cells;
the subcarrier spacing of the first cell and a minimum subcarrier spacing of subcarrier spacings of the M cells;
a pre-configured subcarrier spacing;
a protocol-predefined subcarrier spacing; and
a subcarrier spacing configured by the network-side device.

51. The method according to claim 44, wherein the N4 time units are consecutive N4 time units.

52. The method according to claim 51, wherein the N4 time units are consecutive N4 time units within a preset time range.

53. The method according to claim 42, wherein the third cell is different from the first cell, and the second control resource comprises at least one of the following:

at least one control resource in control resources usable for scheduling the first cell on the third cell; and
at least one control resource in control resources dedicated to scheduling of the first cell on the third cell.

54. The method according to claim 42, wherein the third cell is different from the first cell, and the second control resource comprises at least one of the following:

at least one control resource in control resources unusable for scheduling the first cell in the third cell;
at least one control resource in control resources used for self-scheduling in the third cell;
at least one control resource in control resources used for cross-carrier scheduling in the third cell;
at least one control resource or a specific control resource used for scheduling the first cell; and
at least one control resource or a specific control resource in the third cell.

55. The method according to claim 33, wherein the joint channel monitoring budget corresponding to at least two cells in the M cells comprises a joint channel monitoring budget between N cells, the N cells are any N cells in the M cells, N is an integer greater than 1 and less than or equal to M, and the joint channel monitoring budget between the N cells is a first joint channel monitoring budget determined based on at least one of the following:

a joint channel monitoring budget supported by a terminal;
a pre-configured joint channel monitoring budget;
a protocol-predefined joint channel monitoring budget;
a joint channel monitoring budget configured by the network-side device;
a second joint channel monitoring budget determined based on a control resource corresponding to at least one cell in the N cells;
a third joint channel monitoring budget determined based on a reference configuration; and
a fourth joint channel monitoring budget determined based on a channel monitoring budget corresponding to at least one cell in the N cells.

56. The method according to claim 55, wherein the first joint channel monitoring budget comprises one of the following:

the joint channel monitoring budget supported by the terminal;
the pre-configured joint channel monitoring budget;
the protocol-predefined joint channel monitoring budget;
the joint channel monitoring budget configured by the network-side device;

the second joint channel monitoring budget;
the third joint channel monitoring budget;
a fourth joint channel monitoring budget; and
a maximum, minimum, average, or weighted value of at least two of the joint channel monitoring budget supported by the terminal, the pre-configured joint channel monitoring budget, the protocol-predefined joint channel monitoring budget, the joint channel monitoring budget configured by the network-side device, the second joint channel monitoring budget, the third joint channel monitoring budget, and the fourth joint channel monitoring budget.

57. The method according to claim 55, wherein the N cells comprise the first cell, and the second joint channel monitoring budget comprises one of the following: a carrier aggregation-limited monitoring budget corresponding to the first cell and a non-carrier aggregation-limited monitoring budget corresponding to the first cell.

58. The method according to claim 55, wherein the reference configuration comprises a second reference subcarrier spacing.

59. The method according to claim 58, wherein the third joint channel monitoring budget comprises a maximum channel monitoring budget in at least one channel monitoring budget corresponding to the second reference subcarrier spacing.

60. The method according to claim 58, wherein the second reference subcarrier spacing comprises one of the following:

a subcarrier spacing of a cell of the N cells;
a maximum subcarrier spacing in subcarrier spacings of the N cells; and
a minimum subcarrier spacing in subcarrier spacings of the N cells.

61. A control channel monitoring apparatus, comprising:

a processing module, configured to configure or allocate a first control resource according to a second channel monitoring budget; wherein
the second channel monitoring budget comprises at least one channel monitoring budget of a first channel monitoring budget, a first cell supports being scheduled by M cells, and M is an integer greater than 1;
the M cells comprise the first cell, and the first channel monitoring budget comprises at least one of the following: a channel monitoring budget corresponding to at least one cell in the M cells, and a joint channel monitoring budget corresponding to at least two cells in the M cells; or
the M cells do not comprise the first cell, and the first channel monitoring budget comprises at least one of the following: a channel monitoring budget corresponding to the first cell, a channel monitoring budget corresponding to at least one cell in the M cells, and a joint channel monitoring budget corresponding to at least two cells in the M cells.

62. A terminal, comprising a processor, a memory, and a program or instructions stored in the memory and capable of running on the processor, wherein when the program or the instructions are executed by the processor, the steps of the control channel monitoring method according to any one of claims 1 to 31 are implemented.

63. A network-side device, comprising a processor, a memory, and a program or instructions stored in the memory and capable of running on the processor, wherein when the program or the instructions are executed by the processor, the steps of the control channel monitoring method according to any one of claims 33 to 60 are implemented.

64. A readable storage medium, wherein the readable storage medium stores a program or instructions, and when the program or instructions are executed by a processor, the steps of the control channel monitoring method according to any one of claims 1 to 31 are implemented, or the steps of the control channel monitoring method according to any one of claims 33 to 60 are implemented.

65. A chip, comprising a processor and a communication interface, wherein the communication interface is coupled to the processor, and the processor is configured to execute a program or instructions to implement the steps of the control channel monitoring method according to any one of claims 1 to 31 or the steps of the control channel monitoring method according to any one of claims 33 to 60.

66. A computer program product, wherein the program product is stored in a non-volatile storage medium, and the program product is executed by at least one processor to implement the steps of the control channel monitoring method according to any one of claims 1 to 31 or the steps of the control channel monitoring method according to any one of claims 33 to 60.

67. A communication device, configured to perform the steps of the control channel monitoring method according to any one of claims 1 to 31 or the steps of the control channel monitoring method according to any one of claims 33 to 60.

FIG. 1

FIG. 2

PDCCH zone      Data zone

SCell

PCell

**FIG. 3**

| slot | 1 | 2 | 3 | 4 | 5 | 6 | 7 | 8 | 9 |
|------|-----|-----|-----|-----|-----|-----|-----|-----|-----|
| CSS | 24 | | | | 24 | | | | 24 |
| USS#1 | 20 | | 22 | | 18 | | 24 | | 20 |
| USS#2 | 10 | 18 | 20 | 24 | 15 | 24 | 20 | 24 | 17 |

**FIG. 4**

| A terminal obtains a first channel monitoring budget | 501 |

| The terminal performs a first operation on at least part of control resources in first control resources according to a second channel monitoring budget | 502 |

**FIG. 5**

A network-side device configures or allocates a first control resource according to a second channel monitoring budget — 601

FIG. 6

SS#1    SS#1

Cell
(Cell)
#1

SS#2

SS#2

Cell
(Cell)
#2

SS#3    SS#3    SS#3    SS#3

▨ USS capable of
scheduling Cell#1

▦ CSS capable of
scheduling Cell#1

FIG. 7a

FIG. 7b

SS#1       SS#1

Cell#1

SS#2

16

16

SS#2

16

16

Cell#2

SS#3    SS#3    SS#3    SS#3

8    16    8    8

Slot#0   Slot#1   Slot#2   Slot#3

USS capable of scheduling Cell#1    CSS capable of scheduling Cell#1

FIG. 7c

Cell#1
15kHz

Cell#2
30kHz

4   2   4   6

4   2   4   6   2   4   2   2

Slot#0  Slot#1  Slot#2  Slot#3  Slot#4  Slot#5  Slot#6  Slot#7

SS#1    SS#2

FIG. 7d

Cell#1
15kHz

Cell#2
30kHz

| Slot#0 | Slot#1 | Slot#2 | Slot#3 | Slot#4 | Slot#5 | Slot#6 | Slot#7 |

▨ SS#1          ▦ SS#2

FIG. 7e

800

Control channel monitoring apparatus

Obtaining module — 801

Operation module — 802

FIG. 8

900

Control channel monitoring apparatus

901

Processing module

FIG. 9

1000

Communication device

1001

Processor

1002

Memory

FIG. 10

1100

```
┌─────────────────────────────────────────────────────────────────────┐
│                                                                       │
│  1101 ~  ┌──────────────┐              ┌──────────────────┐ ~ 1102    │
│          │Radio frequency│             │ Network module   │           │
│          │     unit      │             └──────────────────┘           │
│          └──────────────┘                                             │
│                              1110 ~                                   │
│          ┌ ─ ─ ─ ─ ─ ─ ┐   ┌──────────┐                               │
│            Memory         │ │          │                              │
│          │┌───────────┐  │ │          │  ┌──────────────────┐ ~ 1103  │
│  1109 ~   │Application │    │          │  │ Audio output unit │        │
│          ││ program   │  │ │          │  └──────────────────┘         │
│           └───────────┘    │          │                       ┌ 1104  │
│          │┌───────────┐  │ │          │  ┌ ─ ─ ─ ─ ─ ─ ─ ─ ┐          │
│           │ Operating │    │          │     Input unit                │
│          ││  system   │  │ │          │  │┌──────────────┐ │          │
│           └───────────┘    │          │   │  Graphics    │   ~ 11041  │
│          └ ─ ─ ─ ─ ─ ─ ┘  │          │  ││processing unit│ │          │
│                            │          │   └──────────────┘           │
│  1108 ~  ┌──────────────┐  │ Processor│  │┌──────────────┐ │          │
│          │Interface unit│  │          │   │  Microphone  │   ~ 11042  │
│          └──────────────┘  │          │  │└──────────────┘ │          │
│  1107 ~                    │          │  └ ─ ─ ─ ─ ─ ─ ─ ─ ┘          │
│          ┌ ─ ─ ─ ─ ─ ─ ┐  │          │                       ┌ 1106  │
│           User input unit │ │          │  ┌ ─ ─ ─ ─ ─ ─ ─ ─ ┐          │
│ 11071 ~  │┌───────────┐  │ │          │     Display unit              │
│           │Touch panel│    │          │  │┌──────────────┐ │          │
│          │└───────────┘  │ │          │   │Display panel │   ~ 11061  │
│           ┌───────────┐    │          │  │└──────────────┘ │          │
│ 11072 ~  ││Other input│  │ │          │  └ ─ ─ ─ ─ ─ ─ ─ ─ ┘          │
│           │  devices  │    │          │                               │
│          │└───────────┘  │ └────┬─────┘                               │
│          └ ─ ─ ─ ─ ─ ─ ┘       │                                     │
│                            ┌─────────┐                                │
│                            │ Sensor  │ ~ 1105                         │
│                            └─────────┘                                │
│                                                                       │
└─────────────────────────────────────────────────────────────────────┘
```

FIG. 11

FIG. 12

## INTERNATIONAL SEARCH REPORT

| International application No. |
|---|
| **PCT/CN2022/082728** |

**A. CLASSIFICATION OF SUBJECT MATTER**

H04W 72/04(2009.01)i; H04W 72/12(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 调度, 被调度, 自调度, 跨载波, 小区, 主小区, 辅小区, 搜索空间, 控制资源, 预算, 物理下行控制信道, 候选, 备选, 控制信道元素, 盲检, 数目, 限制, 最大值, 映射, schedul+, self-schedule, cross-carrier, cell, PCell, SCell, search space, CSS, USS, control resource, coreset, budget, PDCCH, candidate, CCE, control channel element, blind detect+, BD, number, limit, max, map+

**C. DOCUMENTS CONSIDERED TO BE RELEVANT**

| Category* | Citation of document, with indication, where appropriate, of the relevant passages | Relevant to claim No. |
|---|---|---|
| A | QUALCOMM INC. ""Cross-Carrier Scheduling From an SCell to the PCell/PSCell"" *3GPP TSG RAN WG1 Meeting #104-e R1-2101490,* 19 January 2021 (2021-01-19), sections 3 and 4 | 1-67 |
| A | VIVO. ""Discussion on SCell Scheduling P(S)Cell"" *3GPP TSG RAN WG1 #103-e R1-2007695,* 01 November 2020 (2020-11-01), sections 2.1-2.4 | 1-67 |
| A | CN 112437488 A (QUECTEL WIRELESS SOLUTIONS CO., LTD.) 02 March 2021 (2021-03-02) entire document | 1-67 |
| A | CN 110662228 A (VIVO COMMUNICATION TECHNOLOGY CO., LTD.) 07 January 2020 (2020-01-07) entire document | 1-67 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2022** | **26 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/082728**

| Patent document cited in search report | | | Publication date (day/month/year) | Patent family member(s) | | | Publication date (day/month/year) |
|---|---|---|---|---|---|---|---|
| CN | 112437488 | A | 02 March 2021 | WO | 2021204156 | A1 | 14 October 2021 |
| CN | 110662228 | A | 07 January 2020 | KR | 20210014736 | A | 09 February 2021 |
| | | | | EP | 3817435 | A1 | 05 May 2021 |
| | | | | WO | 2020001225 | A1 | 02 January 2020 |
| | | | | US | 2021112585 | A1 | 15 April 2021 |
| | | | | CN | 110662228 | B | 12 February 2021 |
| | | | | IN | 202127003384 | A | 19 February 2021 |
| | | | | EP | 3817435 | A4 | 04 August 2021 |
| | | | | JP | 2021532625 | A | 25 November 2021 |

Form PCT/ISA/210 (patent family annex) (January 2015)

**EP 4 319 388 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110321320